# EUROPEAN PATENT APPLICATION

(11) **EP 4 576 141 A1**
(43) Date of publication of application: **25.06.2025**
(21) Application number: 24216081.0
(22) Date of filing: 28.11.2024
(51) Int. Cl.: H01G 4/30, H01G 4/12, C04B 35/465, C04B 35/462

(54) **MULTILAYER ELECTRONIC COMPONENT**

(30) Priority: 20.12.2023 KR 20230186897; 08.02.2024 KR 20240019954
(71) Applicant: Samsung Electro-Mechanics Co., Ltd., Gyeonggi-do (KR)
(72) Inventor: Koo, Bon Hyeong, Suwon-si, Gyeonggi-do (KR); Yoon, Seok Hyun, Suwon-si, Gyeonggi-do (KR); Kwon, Hyung Soon, Suwon-si, Gyeonggi-do (KR); Yun, Byung Kil, Suwon-si, Gyeonggi-do (KR); Kim, Se Yong, Suwon-si, Gyeonggi-do (KR); Jang, Min Jung, Suwon-si, Gyeonggi-do (KR); Kim, Geon Hoi, Suwon-si, Gyeonggi-do (KR); Lee, Byung Ho, Suwon-si, Gyeonggi-do (KR)
(74) Representative: Grünecker Patent- und Rechtsanwälte PartG mbB

(57) **Abstract**

A multilayer electronic component according to an example embodiment of the present disclosure includes: a body including a capacitance formation portion including a dielectric layer and an internal electrode; and an external electrode disposed on the body, and when secondary phase grains including rare earth element and titanium (Ti) are referred to as first secondary phase grains and secondary phase grains including the rare earth element and silicon (Si) are referred to as second secondary phase grains, and when the number of the first secondary phase grains included in the capacitance formation portion is referred to as A and the number of the second secondary phase grains included in the capacitance formation portion is referred to as B, the capacitance formation portion satisfies 0 < A/(A+B) ≤ 0.4.

## Description

### CROSS-REFERENCE TO RELATED APPLICATION(S)

This application claims the benefit of priority to Korean Patent Application Nos. 10-2023-0186897 and 10-2024-0019954 filed on December 20, 2023, and February 8, 2024, in the Korean Intellectual Property Office, the disclosures of which are incorporated herein by reference in their entirety.

### TECHNICAL FIELD

The present disclosure relates to a multilayer electronic component.

### BACKGROUND

A multilayer ceramic capacitor (MLCC), a multilayer electronic component, is a chip-type condenser, mounted on the printed circuit boards of various types of electronic product, such as image display devices including a liquid crystal display (LCD) and a plasma display panel (PDP), computers, smartphones and mobile phones, and serves to charge or discharge electricity therein or therefrom.

The multilayer ceramic capacitor may be used as a component in various electronic devices due to having a small size, ensuring high capacitance and being easily mounted. With the miniaturization and implementation of high output power of various electronic devices such as computers and mobile devices, demand for miniaturization and high capacitance of multilayer ceramic capacitors has also been increasing.

As the market of MLCCs for IT as well as MLCCs for electric devices has expanded, demand for products with high rated voltage and excellent reliability in the same capacity range has increased. In general, it is known that the smaller the grain size and the more grain boundaries, the better the reliability of the dielectric. Among additive elements in an MLCC dielectric composition, the effects of transition metal elements, a fixed valence acceptor element and a variable valence acceptor element, and rare earth elements on reliability are already known, and in general, conditions with good reliability are selected through optimization of a composition ratio of dielectric additive elements including the same. In the more than 30 years since Base Metal Electrode (BME) MLCC was industrialized, composition optimization work has been continuously conducted to improve reliability, and such cases have already been reported in numerous patents. Even with the same recent dielectric composition, it has been reported that there is a significant difference in reliability depending on the microstructure, distribution and degree of solidification of additive elements, and process conditions, and research thereon is actively proceeding.

Existing high-capacitance multilayer electronic components are materials sintered by adding fixed valence acceptors such as magnesium (Mg), aluminum (Al), and the like, and adding rare earth elements serving as a donor, or adding variable valence acceptors such as manganese (Mn), vanadium (V), chromium (Cr), and the like, while also adding sintering aids such as barium (Ba) or silicon (Si). However, in order to manufacture high-capacitance and highly reliable multilayer electronic components, doping of additional elements is required, and as in the past, it is a desirable direction to additionally add rare earth elements whose main purpose is to improve reliability. Accordingly, by increasing the addition content of the rare earth elements, some rare earth elements may form a barium titanate (BaTiO₃)-based crystal lattice and core-shell structure, thereby realizing further improved reliability. However, some rare earth elements do not participate in shell formation through solid solution in the crystal lattice of barium titanate (BaTiO₃), but combine with other elements to form a secondary phase, and cases in which the formed secondary-phase does not affect reliability or rather has a negative effect have been found, and thus, control of the secondary-phase is required.

### SUMMARY

An aspect of the present disclosure is to provide a multilayer electronic component having improved reliability.

An aspect of the present disclosure is to provide a multilayer electronic component satisfying X7R or X7S characteristics.

An aspect of the present disclosure is to provide a multilayer electronic component having improved MTTF of high temperature and high pressure acceleration lifespan.

An aspect of the present disclosure is to provide a multilayer electronic component having improved capacitance.

However, the aspects of the present disclosure are not limited to the above-described contents, and may be more easily understood in the process of describing specific example embodiments of the present disclosure.

A multilayer electronic component according to an example embodiment of the present disclosure may include: a body including a capacitance formation portion including a dielectric layer and an internal electrode; and an external electrode disposed on the body, and when secondary phase grains including rare earth elements and titanium (Ti) are referred to as first secondary phase grains and secondary phase grains including the rare earth elements and silicon (Si) are referred to as second secondary phase grains, and when the number of the first secondary phase grains included in the capacitance formation portion is referred to as A and the number of the second secondary phase grains included in the capacitance formation portion is referred to as B, the capacitance formation portion may satisfy 0 < A/(A+B) ≤ 0.4.

A multilayer electronic component according to another example embodiment of the present disclosure may include: a body including a capacitance formation portion including a dielectric layer and an internal electrode; and an external electrode disposed on the body, and when secondary phase grains including rare earth elements and titanium (Ti) are referred to as first secondary phase grains and secondary phase grains including the rare earth elements and silicon (Si) are referred to as second secondary phase grains, and when the number of the first secondary phase grains included in the capacitance formation portion is referred to as A and the number of the second secondary phase grains included in the capacitance formation portion is referred to as B, the capacitance formation portion may satisfy 0 < A and 0 < B.

One of the various effects of the present disclosure is to improve the reliability of a multilayer electronic component.

One of the various effects of the present disclosure is to satisfy the X7R or X7S characteristics of a multilayer electronic component.

One of the various effects of the present disclosure is to improve the MTTF of the high temperature and high pressure accelerated lifespan of a multilayer electronic component.

One of the various effects of the present disclosure is to improve the capacitance of a multilayer electronic component.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 schematically illustrates a perspective view of a multilayer electronic component according to an example embodiment of the present disclosure;
FIG. 2 schematically illustrates an exploded perspective view illustrating a stack structure of internal electrodes;
FIG. 3 schematically illustrates a cross-sectional view taken along line II' of FIG. 1;
FIG. 4 schematically illustrates a cross-sectional view taken along line II-II' of FIG. 1;
FIG. 5 schematically illustrates an enlarged view of region P in FIG. 3.

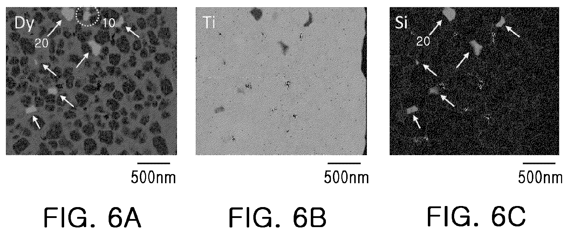

FIG. 6A is an image obtained by mapping dysprosium (Dy) on a cross-section of a dielectric layer of an example embodiment of the present disclosure using energy dispersive X-ray spectroscopy (EDS) mode of a scanning transmission electron microscope (STEM), FIG. 6B is an image obtained by mapping titanium (Ti) on the same cross-section as that of FIG. 6A using the energy dispersive X-ray spectroscopy (EDS) mode of the scanning transmission electron microscope (STEM), and FIG. 6C is an image obtained by mapping silicon (Si) on the same cross-section as that of FIG. 6A using the energy dispersive X-ray spectroscopy (EDS) mode of the scanning transmission electron microscope (STEM);
FIG. 7A is an image of first secondary phase grains included in a dielectric layer of an example embodiment of the present disclosure captured in an HAADF mode of a scanning transmission electron microscope (STEM), and FIG. 7B is an image of second secondary phase grains included in a dielectric layer of an example embodiment of the present disclosure captured in the HAADF mode of the scanning transmission electron microscope (STEM);
FIG. 8A is an image of first secondary phase grains included in a dielectric layer of an example embodiment of the present disclosure captured in a scanning transmission electron microscope (STEM), and FIG. 8B is a graph illustrating atomic percentages of each element after performing a line-profile to penetrate through the first secondary phase grains of FIG. 8A; and
FIG. 9A is an image of second secondary phase grains included in a dielectric layer of an example embodiment of the present disclosure captured in a scanning transmission electron microscope (STEM), and FIG. 9B is a graph illustrating atomic percentages of each element after performing a line-profile to penetrate through the second secondary phase grains of FIG. 9A.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

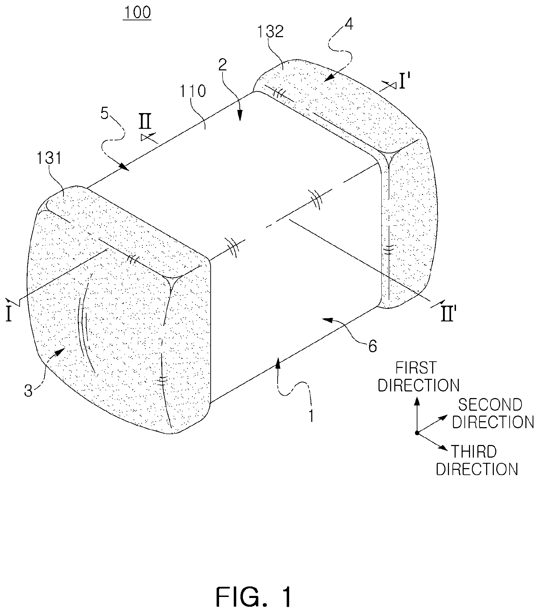

FIG. 1 schematically illustrates a perspective view of a multilayer electronic component according to an example embodiment of the present disclosure.

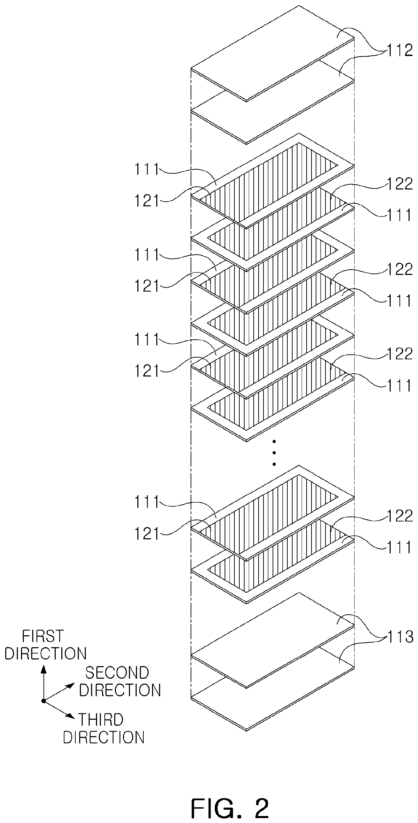

FIG. 2 schematically illustrates an exploded perspective view illustrating a stack structure of internal electrodes.

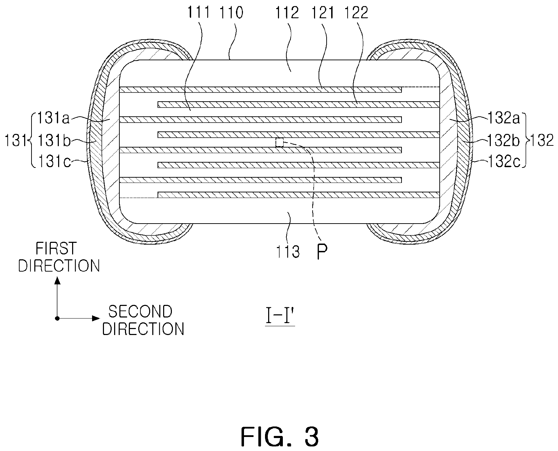

FIG. 3 schematically illustrates a cross-sectional view taken along line II' of FIG. 1.

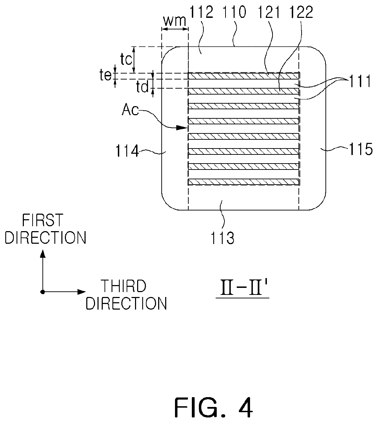

FIG. 4 schematically illustrates a cross-sectional view taken along line II-II' of FIG. 1.

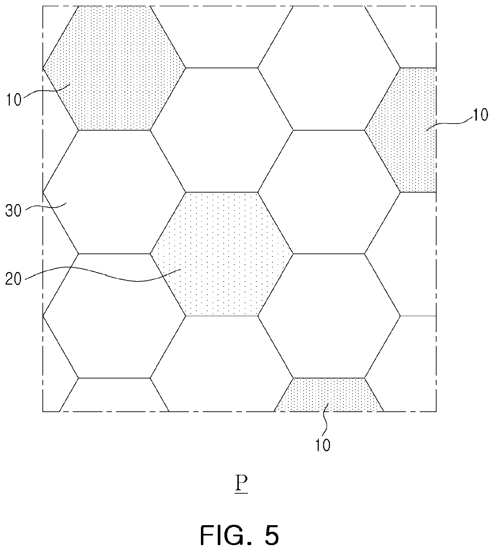

FIG. 5 schematically illustrates an enlarged view of region P in FIG. 3.

Hereinafter, a multilayer electronic component according to an example embodiment of the present disclosure will be described in detail with reference to FIGS. 1 to 5. However, as an example of a multilayer electronic component, a multilayer ceramic capacitor will be described, but the multilayer electronic component of the present disclosure may also be applied to various electronic products using dielectric compositions, such as inductors, piezoelectric elements, varistors, or thermistors.

A multilayer electronic component 100 according to an example embodiment of the present disclosure may include a body 110 including a capacitance formation portion Ac including a dielectric layer 111 and internal electrodes 121 and 122; and external electrodes 131 and 132 disposed on the body 110, and when secondary phase grains including rare earth elements and titanium (Ti) are referred to as first secondary phase grains 10 and secondary phase grains including the rare earth elements and silicon (Si) are referred to as second secondary phase grains 20, and when the number of the first secondary phase grains 10 included in the capacitance formation portion Ac is referred to as A and the number of the second secondary phase grains 20 included in the capacitance formation portion Ac is referred to as B, the capacitance formation portion Ac may satisfy 0 < A/(A+B) ≤ 0.4.

A multilayer electronic component 100 according to another example embodiment of the present disclosure may include a body 110 including a capacitance formation portion Ac including a dielectric layer 111 and internal electrodes 121 and 122; and external electrodes 131 and 132 disposed on the body 110, and when secondary phase grains including rare earth elements and titanium (Ti) are referred to as first secondary phase grains 10 and secondary phase grains including the rare earth elements and silicon (Si) are referred to as second secondary phase grains 20, and when the number of the first secondary phase grains 10 included in the capacitance formation portion Ac is referred to as A and the number of the second secondary phase grains 20 included in the capacitance formation portion Ac is referred to as B, the capacitance formation portion Ac may satisfy 0 < A and 0 < B.

The body 110 may include dielectric layers 111 and internal electrodes 121 and 122 alternately stacked.

More specifically, the body 110 may include a capacitance formation portion Ac disposed inside the body 110, and including first internal electrodes 121 and second internal electrodes 122 alternately arranged to face each other with the dielectric layer 111 interposed therebetween to form capacitance.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with entirely straight lines, but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction.

In a state in which a plurality of dielectric layers 111 included in the body 110 are sintered, boundaries between adjacent dielectric layers 111 may be integrated so as to be difficult to identify without using a scanning electron microscope (SEM).

The materials included in the dielectric layer 111 are not limited as long as sufficient capacity may be obtained. In general, a perovskite (ABO₃)-based material may be used, and, for example, a barium titanate-based material, a lead composite perovskite-based material, or a strontium titanate-based material may be used. The barium titanate-based material may include BaTiO₃-based ceramic particles, and examples of ceramic particles may include BaTiO₃, and (Ba₁₋ₓCaₓ)TiO₃ (0<x<1), Ba(Ti_{x-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), which is formed by partially employing calcium (Ca) and zirconium (Zr) in BaTiO₃.

Additionally, as the materials included in the dielectric layer 111, various ceramic additives, organic solvents, binders, dispersants, and the like, may be added to particles such as barium titanate (BaTiO₃) according to the purpose of the present disclosure.

Additionally, the dielectric layer 111 may be formed using a dielectric material such as barium titanate (BaTiO₃), and may include dielectric microstructures after sintering. A dielectric microstructure may include a plurality of dielectric grains 30, a dielectric grain boundary disposed between the adjacent dielectric grains 30, and a triple point disposed at a point at which three or more dielectric grain boundaries are in contact with each other, each of which may be included in plural. The dielectric grains 30 may include dielectric grains with a core-shell structure and dielectric grains without a core-shell structure, with more specific details thereof being described below.

Existing high-capacitance multilayer electronic components are materials sintered by adding fixed valence acceptors such as magnesium (Mg), aluminum (Al), and the like, and adding rare earth elements serving as a donor, or adding variable valence acceptors such as manganese (Mn), vanadium (V), chromium (Cr), and the like, while also adding sintering aids such as barium (Ba) or silicon (Si). However, in order to manufacture high-capacitance and highly reliable multilayer electronic components, doping of additional elements is required, and as in the past, it is a desirable direction to additionally add rare earth elements whose main purpose is to improve reliability. Accordingly, by increasing the addition content of the rare earth elements, some rare earth elements may be solidified in a crystal lattice of barium titanate (BaTiO₃) to form a core-shell structure, thereby realizing further improved reliability. However, some rare earth elements do not participate in shell formation through solid solution in the crystal lattice of barium titanate (BaTiO₃), but combine with other elements to form a secondary phase, and cases in which the formed secondary phase does not affect reliability or rather has a negative effect have been found, and thus, control of the secondary phase is required.

Accordingly, in an example embodiment of the present disclosure, in a donor-doped dielectric composition that may realize high reliability, the rare earth elements added in excessive amounts may adjust a ratio of the number (A) of first secondary phase grains 10 generated by combining rare earth elements and titanium (Ti) and the number B of second secondary phase grains 20 generated by combining the rare earth elements with silicon (Si), in addition to the core-shell structure, thereby achieving high reliability.

A movement of oxygen vacancies generated by an electric field, which is the most well-known deterioration mechanism of a multilayer electronic component, may accelerate the semiconductorization of the dielectric layer, but since the first dielectric grain 10 may be used as a passage for oxygen vacancies to cause rapid deterioration, and thus, the generation of the first dielectric grains 10 may be minimized. Since the second secondary phase grains 20 may serve to suppress the movement of oxygen vacancies, when the second secondary phase grains 20 are formed in an appropriate number, this may not adversely affect dielectric properties and reliability. Accordingly, adjusting the ratio of the number (A) of first dielectric grains 10 and the number (B) of second dielectric grains 20 through controlling the content of the added elements corresponds to one of the various mechanisms by which high reliability of the multilayer electronic component may be achieved, and side effects that may occur due to the addition of excessive amounts of rare earth elements may be effectively prevented.

In an example embodiment of the present disclosure, when the secondary phase grains including the rare earth elements and titanium (Ti) are referred to as first secondary phase grains 10 and the secondary phase grains including rare earth elements and silicon (Si) are referred to as second secondary phase grains 20, and when the number of first secondary phase grains 10 included in the capacitance formation portion Ac is referred to as A and the number of second secondary phase grains 20 included in the capacitance formation portion Ac is referred to as B, the capacitance formation portion Ac may satisfy 0 < A/(A+B) ≤ 0.4.

In this case, the capacitance formation portion Ac may include a cross-sectional area of 1.85 um × 1.85 um satisfying a condition 0 < A/(A+B) ≤ 0.4, and in the cross-sectional area of 1.85 um × 1.85 µm satisfying 0 < A < B, A and B may satisfy 5 ≤ A+B < 20. In other words, the 1.85 um × 1.85 um cross-sectional area of one of the capacitance formation portions Ac may satisfy 0 < A and 0 < B, may satisfy 0 < A < B, and may satisfy 5 ≤ A+B < 20.

In the present disclosure, "secondary phase or secondary phase grains" may denote particles, segregation, or grains having a composition or a crystal lattice different from perovskite-based (ABO₃) dielectric particles, and may denote a collection of elements that are not solidified in dielectric grains, but the present disclosure is not limited thereto. For example, the first secondary phase grains 10 and the second secondary phase grains 20 may refer to a collection of elements that are not solidified or substituted in a crystal lattice structure of the dielectric grains 30.

The secondary phase grains 10 and 20 may be included in the dielectric layer 111 in the capacitance formation portion Ac, or may also be detected on a boundary surface with the internal electrodes 121 and 122, but the present disclosure is not limited thereto, and the secondary phase grains 10 and 20 may be included in any region in the capacitance formation portion Ac.

Additionally, in the present disclosure, as an example of a more specific method of measuring the contents of each constituent of the multilayer electronic component 100, for example, elements included in the dielectric layer 111, in the case of a destruction method, components may be analyzed using an Energy Dispersive X-ray Spectroscopy (EDS) mode of the scanning electron microscopy (SEM), an EDS mode of a transmission electron microscope (TEM), or an EDS mode of a scanning transmission electron microscope (STEM). First, a thinly sliced analysis sample is prepared using Focused Ion Beam (FIB) equipment in a region to be measured. Then, a damaged layer on a surface of the thinly sliced analysis sample is removed using xenon (Xe) or argon (Ar) ion milling, and then, qualitative/quantitative analysis is performed by mapping each component to be measured in an image obtained using SEM-EDS, TEM-EDS, or STEM-EDS. When measuring each component, a point measurement, a line measurement such as a line-profile, or an area measurement to observe components in a certain area may be performed. In this case, the qualitative/quantitative analysis graph of each component may be expressed in terms of mass percentage (wt%), atomic percentage (at%), or mol percentage (mol%) of each component. In this case, the qualitative/quantitative analysis graph thereof may be expressed by converting the number of mols of another specific component to the number of mols of a specific component.

Through another method, a multilayer electric component may be crushed and a region to be measured may be selected, and the components of a corresponding region of such a selected region may be analyzed using devices such as inductively coupled plasma spectroscopy (ICP-OES) and inductively coupled plasma mass spectrometry (ICP-MS).

The first secondary phase grains 10 and the second secondary phase grains 20 may be included in the capacitance formation portion Ac, and, more specifically, may be included in the dielectric layer 111 of the capacitance formation portion Ac. When the number of first secondary phase grains 10 included in the capacitance formation portion Ac is referred to as A and the number of second secondary phase grains 20 included in the capacitance formation portion Ac is referred to as B, the capacitance formation portion Ac may satisfy 0 < A/(A+B) ≤ 0.4.

In other words, a ratio (A/(A+B)) of the number (A) of first secondary phase grains 10 included in the capacitance formation portion Ac to a sum (A+B) of the number (A) of first secondary phase grains 10 included in the capacitance formation portion Ac and the number (B) of the second secondary phase grains 20 included in the capacitance formation portion Ac may satisfy more than 0 and 0.4 or less.

A method of counting the number (A) of first secondary phase grains (10) and the number (B) of second secondary phase grains (20) included in the capacitance formation portion Ac may be, for example, as follows, but the present disclosure is not limited thereto.

First, after cutting first and second directional cross-sections from a third directional center of the body 110, rare earth elements, titanium (Ti) and silicon (Si) were mapped using an EDS mode of the scanning electron microscopy (SEM), the transmission electron microscopy (TEM), or the scanning transmission electron microscopy (STEM) for an arbitrary cross-sectional area, and then, a region in which a high concentration of rare earth elements and a high concentration of titanium (Ti) overlap each other may be primarily interpreted as the first secondary phase grain 10, and a region in which a high concentration of rare earth elements and a high concentration of silicon (Si) overlap each other may be primarily interpreted as the second secondary phase grain 20. More specifically, with reference to FIGS. 6A to 6C, FIG. 6A is an image obtained by mapping dysprosium (Dy) on a cross-sectional area of 3.0 um × 3.0 um of the dielectric layer of an example embodiment of the present disclosure using the EDS mode of the scanning transmission electron microscope (STEM), FIG. 6B is an image obtained by mapping titanium (Ti) on the same cross-section as that of FIG. 6A using the EDS mode of the scanning transmission electron microscope (STEM), and FIG. 6C is an image obtained by mapping silicon (Si) on the same cross-section as that of FIG. 6A using the EDS mode of the scanning transmission electron microscope (STEM). The high concentration of rare earth elements indicated by a dotted circle (see FIG. 6A) corresponds to the first secondary phase grains 10, and the high concentration of rare earth elements indicated by arrows (see FIG. 6A) and the high concentration of silicon (Si) (see FIG. 6C) indicated by arrows correspond to the second secondary phase grains 20. The number (A) of first secondary phase grains 10 included in the cross-sectional area of 3.0 µm × 3.0 µm is observed to be 1, and the number (B) of second secondary phase grains 20 is observed to be 6, which corresponds A/(A+B)=0.14 and satisfies the numerical range of the present disclosure, from which it may be predicted that reliability deterioration may occur relatively slowly. In this case, it may be confirmed that one first secondary phase grain 10 and six second secondary phase grains 20 are included in the cross-sectional area of 1.85 µm × 1.85 µm, and even in the cross-sectional area of 1.85 µm × 1.85 µm, there is A/(A+B)=0.14 which satisfies the numerical range of the present disclosure.

As another method of observing the first secondary phase grains 10 and the second secondary phase grains 20, first, after cutting the first and second directional cross-sections from the third directional center of the body 110, when an image of an arbitrary cross-sectional area of the central portion were captured using a high-angle annular dark field (HAADF) mode of the scanning electron microscopy (SEM), the transmission electron microscopy (TEM), or the scanning transmission electron microscopy (STEM), areas (or grains) observed in white contrast may be primarily interpreted as corresponding to secondary phase grains. In this case, the first secondary phase grains 10 may correspond to a pyrochlore phase having a cubic crystal system, so that the first secondary phase grains 10 has a shape close to a polygon, and pores may be observed between adjacent barium titanate (BaTiO₃)-based dielectric grains. On the other hand, the second secondary phase grains 20 may have a triclinic crystal system, so that the second secondary phase grains 20 has a grain shape close to amorphous, and may be observed with almost no pores between adjacent barium titanate (BaTiO3)-based dielectric grains.

Additionally, the first secondary phase grains 10 may include RE-Ti-O (RTO, where RE is a rare earth element) in which the rare earth element and titanium oxide (Ti-Oₓ) are combined, and the second secondary phase grains 20 may include RE-Si-O (RSO, where RE is a rare earth element), which the rare earth element and silicon oxide (Si-Oₓ) are combined, but the present disclosure is not limited thereto.

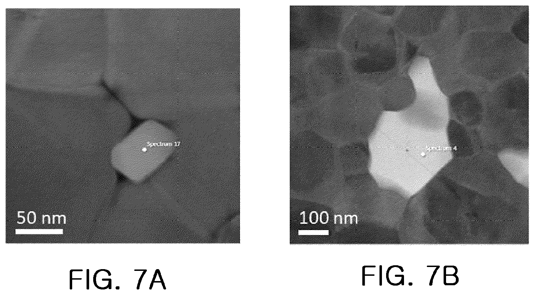

More specifically, with reference to FIGS. 7A and 7B, FIG. 7A is an image of the first secondary phase grain 10 included in the dielectric layer 111 of an example embodiment of the present disclosure captured in the HAADF mode of the scanning transmission electron microscope (STEM), and FIG. 7B is an image of the second secondary phase grains 20 included in the dielectric layer 111 of an example embodiment of the present disclosure captured in the HAADF mode of the scanning transmission electron microscope (STEM). It may be confirmed that the first secondary phase grain 10 of FIG. 7A has a substantially polygonal shape, and pores are observed between adjacent barium titanate (BaTiO₃) dielectric grains, while the second secondary phase grain 20 of FIG. 7b has a shape close to amorphous and no pores are observed between adjacent barium titanate (BaTiO₃) dielectric grains.

After primarily analyzing whether the first secondary phase grains 10 and the second secondary phase grains 20 are present using the above-described method, secondary determination may be performed through a more detailed component analysis, and for more detailed component analysis, the type and content of elements included in the measurement area may be confirmed through the above-described EDS analysis, specific criteria for determining the first secondary phase grains 10 and the second secondary phase grains 20 may be as follows.

First, the first secondary phase grains 10 may have a ratio of the average atomic percentage of rare earth elements to the average atomic percentage of titanium (Ti) included in the first secondary phase grains 10 of 0.4 or more and 1.5 or less. In other words, the ratio (RE at%/Ti at%) of the average atomic percentage of the rare earth elements (RE at%, where RE is a rare earth element) to the average atomic percentage of titanium (Ti at%) included in the first secondary phase grain 10 may be 0.4 or more and 1.5 or less. In this case, the average atomic percentage of the rare earth elements included in the first secondary phase grains 10 may be 10 at% or more and 25 at% or less, and the average atomic percentage of titanium (Ti) included in the first secondary phase grains 10 may be more than 15 at% and less than or equal to 20 at%.

Meanwhile, the first secondary phase grains 10 may further include barium (Ba), and the average atomic percentage of barium (Ba) included in the first secondary phase grains 10 may be 0.01 at% or more and 6 at% or less.

Additionally, the first secondary phase grains 10 may further include silicon (Si), and the average atomic percentage of silicon (Si) included in the first secondary phase grains 10 may be 0.05 at% or more and 1.0 at% or less.

Next, a ratio of the average atomic percentage of the rare earth elements to the average atomic percentage of silicon (Si) included in the second secondary phase grains 20 may be 0.5 or more and 2.0 or less. In other words, the ratio (RE at%/Si at%) of the average atomic percentage of the rare earth elements (RE at%, where RE is a rare earth element) to the average atomic percentage of silicon (Si at%) included in the second secondary phase grain 20 may be 0.5 or more and 2.0 or less. In this case, the average atomic percentage of the rare earth elements included in the second secondary phase grains 20 may be 20 at% or more and 25 at% or less, and the average atomic percentage of silicon (Si) included in the second secondary phase grains 20 may be 10 at% or more and 15 at% or less.

Meanwhile, the second secondary phase grains 20 may further include barium (Ba), and the average atomic percentage of barium (Ba) included in the second secondary phase grains 20 may be 1 at% or more and 5 at% or less.

Additionally, the second secondary phase grains 20 may further include titanium (Ti), and the average atomic percentage of titanium (Ti) included in the second secondary phase grains 20 may be 0.1 at% or more and 1.0 at% or less.

When specifically performing measurement using FIGS. 7A and 7B, which are an example embodiment of the present disclosure, as an example, as described above, the white contrast in FIG. 7A corresponds to the first secondary phase grains 10, and the white contrast in FIG. 7B corresponds to the second secondary phase grains 20. When point measurement was performed at the point corresponding to Spectrum 17 in the STEM-EDS mode for the first secondary phase grain 10 in FIG. 7A, dysprosium (Dy), the rare earth element, was measured at 10.8 at%, titanium (Ti) was measured at 16.5 at%, barium (Ba) was measured at 5.5 at%, and a trace amount of silicon (Si) was measured at 1.0 at% or less, and a ratio of the atomic percentage of dysprosium (Dy), the rare earth element, to the atomic percentage of titanium (Ti) was calculated to be 0.65. When point measurement was performed at a point corresponding to Spectrum 4 in the STEM-EDS mode for the second secondary phase grain 20 in FIG. 7B, dysprosium (Dy), the rare earth element, was measured at 20.0 at%, silicon (Si) was measured at 11.5 at%, barium (Ba) was measured at 5.2 at%, and a trace amount of titanium (Ti) was measured at 0.8 at%, and a ratio of the atomic percentage of dysprosium (Dy), the rare earth element, to the atomic percentage of silicon (Si) was calculated to be 1.74.

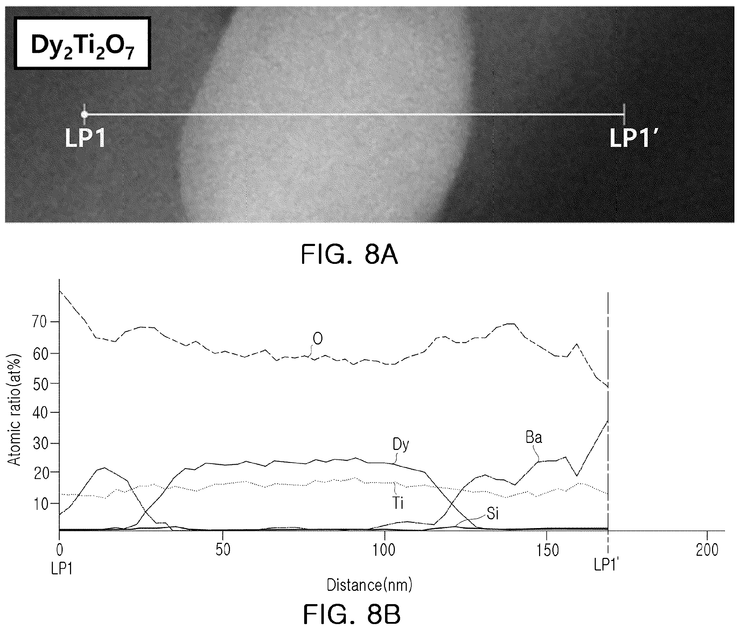

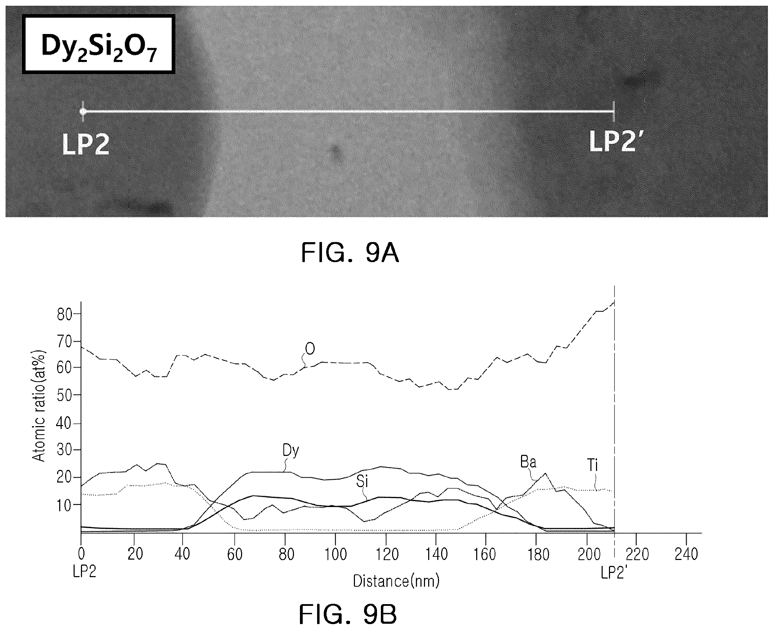

Another example embodiment of the present disclosure will be described in detail using FIGS. 8A, 8B, 9A, and 9B as examples, FIG. 8A is an image of first secondary phase grains 10 included in the dielectric layer of another example embodiment of the present disclosure captured with a scanning transmission electron microscope (STEM), and FIG. 8B is a graph illustrating atomic percentages for each element included in a line-profile after conducting a line-profile (LP1-LP1') to penetrate through the first secondary phase grain 10 of FIG. 8A. A region indicated in white contrast in FIG. 8A corresponds to the first secondary phase grains 10, and the other areas indicated in black contrast correspond to barium titanate (BaTiO₃) dielectric grains 30. On the line-profile (LP1-LP1'), in the first secondary phase grains 10, the atomic percentage of dysprosium (Dy) was measured to be 20 at% or more and 25 at% or less, the atomic percentage of titanium (Ti) was measured to be more than 15 at% and 20 at% or less, the atomic percentage of barium (Ba) was measured to be 0.01 at% or more and 5.5 at% or less, and the atomic percentage of silicon (Si) was measured to be 0.1 at% or more and 0.4 at% or less. Meanwhile, on the line-profile (LP1-LP1'), in the dielectric grain 30, the atomic percentage of dysprosium (Dy) was measured to be 0.5 at% or more and 2.0 at% or less, the atomic percentage of titanium (Ti) was measured to be 10 at% or more and 15 at% or less, the atomic percentage of barium (Ba) was measured to be more than 20 at%, and the atomic percentage of silicon (Si) was measured to be 0.1 at% or more and 0.4 at% or less.

Additionally, FIG. 9A is an image of second secondary phase grains 20 included in a dielectric layer of another example embodiment of the present disclosure captured with a scanning transmission electron microscope (STEM), and FIG. 9B is a graph illustrating atomic percentages for each element included in a line-profile after conducting a line-profile (LP2-LP2') to penetrate through the second secondary phase grain 20 of FIG. 9A. A region indicated in white contrast in FIG. 9A corresponds to the second secondary phase grains 20, and the other regions indicated in black contrast correspond to barium titanate (BaTiO₃) dielectric grains 30. On the line-profile (LP2-LP2'), in the second secondary phase grains 20, the atomic percentage of dysprosium (Dy) was measured to be 20 at% or more and 25 at% or less, the atomic percentage of silicon (Si) was measured to be 10 at% or more and 15 at% or less, the atomic percentage of barium (Ba) was measured to be 1.5 at% or more and 5.0 at% or less, and the atomic percentage of titanium (Ti) was measured to be 0.5 at% or more and 1.0 at% or less. Meanwhile, on the line-profile (LP2-LP2'), in the dielectric grain 30, the atomic percentage of dysprosium (Dy) was measured to be 0.5 at% or more and 2.0 at% or less, the atomic percentage of silicon (Si) was measured to be 0.1 at% or more and 0.4 at% or less, the atomic percentage of barium (Ba) was measured to be 20 at% or more and 25 at% or less, and the atomic percentage of titanium (Ti) was measured to be 10 at% or more and 20 at% or less.

Meanwhile, when counting the number (A) of first secondary phase grains 10 and number (B) of the second secondary phase grains 20 included in the capacitance formation portion Ac, sizes of the first secondary phase grains 10 and the second secondary phase grains 20 serving as a reference are not particularly limited, but the size of the first secondary phase grains 10 may be 50 nm or more and 1 um or less, and the size of the second secondary phase grains 20 may be 100 nm or more and 1 um or less. Here, the sizes of the first secondary phase grains 10 and the second secondary phase grains 20 may correspond to values obtained by averaging a major diameter and a minor diameter passing through a center of one secondary phase grain, respectively, but the present disclosure is not limited thereto.

In an example embodiment of the present disclosure, the capacitance formation portion Ac may satisfy 0 < A/(A+B) ≤ 0.4, which may satisfy characteristics in which a room temperature dielectric constant is 1500 or more, characteristics in which a dielectric loss factor (DF) is 1.5% or more, characteristics in which a breakdown voltage (BDV) is 350 V or more, characteristics in which Mean Time to Failure (MTTF) is 200 hours or more under a Highly Accelerated Life Test (HALT) condition applying an electric field of 42 V/µm at a temperature of 150 °C, characteristics in which insulation resistance (IR, high temperature insulation resistance) is 3.0E+5 Ω or more at a temperature of 150 °C, and X7R characteristic which is a temperature coefficient of capacitance (TCC) according to a target temperature (the capacitance in a temperature range of -55 °C or more and 125 °C or less satisfies -15 % or more and 15% or less based on the capacitance at 25 °C).

When the capacitance formation portion Ac is A/(A+B)=0, there may a risk in that the high-temperature insulation resistance (IR) characteristics, the breakdown voltage (BDV) characteristics, or the high-temperature reliability characteristics may deteriorate, and when the capacitance formation portion Ac is 0.4 < A/(A+B), there may be a risk in which the room temperature dielectric constant characteristics, the dielectric loss coefficient (DF) characteristics, the high temperature insulation resistance (IR) characteristics, the breakdown voltage (BDV) characteristics, or the high temperature reliability characteristics may deteriorate.

Meanwhile, when the rare earth element included in the first secondary phase grains 10 is referred to as the first rare earth element and the rare earth element included in the second secondary phase grains 20 is referred to as the second rare earth element, the first and second rare earth elements may be the same, but the present disclosure is not limited thereto, and the first and second rare earth elements may be different from each other, and when each of the first and second rare earth elements includes a plurality of rare earth elements, the first and second rare earth elements may all be the same or only some thereof may be the same, or they may all be different.

In this case, the first and second rare earth elements may be at least one of lanthanum (La), samarium (Sm), dysprosium (Dy), terbium (Tb), holmium (Ho), erbium (Er), and gadolinium (Gd), but may not include at least one of ytterbium (Yb) and yttrium (Y).

Meanwhile, the dielectric layer 111 may include dielectric grains having a core-shell structure including rare earth elements, and in this case, an average atomic percentage of the rare earth elements in the core may be more than 0 at% and less than 0.5 at%, and an average atomic percentage of the rare earth elements in the shell may be 0.5 at% or more and less than 2.0 at%.

The average atomic percentage of the rare earth elements in the core may satisfy more than 0 at% and less than 0.5 at%, and the average atomic percentage of the rare earth elements in the shell may satisfy 0.5 at% or more and less than 2.0 at%, thereby implementing a highly reliable multilayer electronic component 100.

Meanwhile, in another example embodiment of the present disclosure, when the number of first secondary phase grains 10 included in the capacitance formation portion Ac is referred to as A and the number of second secondary phase grains 20 included in the capacitance formation portion Ac is referred to as B, the capacitance formation portion Ac may satisfy 0 < A and 0 < B, and preferably, the capacitance formation portion Ac may satisfy 0 < A < B.

In this case, the capacitance formation portion Ac may include a cross-sectional area of 1.85 um × 1.85 um satisfying a condition of 0 < A < B, and in the cross-sectional area of 1.85 µm × 1.85 µm satisfying the condition of 0 < A < B, A and B may satisfy 5 ≤ A+B < 20. In other words, the 1.85 µm × 1.85 µm cross-sectional area of one of the capacitance formation portions Ac may satisfy 0 < A and 0 < B, may satisfy 0 < A < B, and may satisfy 5 ≤ A+B < 20.

The capacitance formation portion Ac may satisfy 0 < A and 0 < B, which may satisfy at least one of characteristics in which a room temperature dielectric constant is 1500 or more, characteristics in which a dielectric loss coefficient (DF) is 1.5% or more, characteristics in which the breakdown voltage (BDV) is 350 V or more, characteristics in which Mean Time to Failure (MTTF) is 200 hours or more under a Highly Accelerated Life Test (HALT) condition applying an electric field of 42 V/µm at a temperature of 150 °C, characteristics in which insulation resistance (IR, high temperature insulation resistance) is 3.0E+5 Ω or more at a temperature of 150 °C and X7R characteristics which is a temperature coefficient of capacitance (TCC) according to a target temperature.

This may provide a highly reliable multilayer electronic component 100 due to the addition of the rare earth elements, but the occurrence of unexpected side effects due to the generation of the first secondary phase grains 10 due to the addition of excessive amounts of rare earth elements may be prevented by generating the second secondary phase grains 20, so that the side effects due to the generation of the first secondary phase grains 10 may be prevented in advance.

Meanwhile, in addition to the barium titanate (BaTiO₃)-based main component, first to fifth subcomponents may be added to the dielectric layer 111, and may be detected as first to fifth subcomponent elements.

In the present disclosure, "main component" may refer to a component that occupies a relatively large weight ratio or atomic number ratio as compared to other components, and refer to 50 wt% or more of a component based on the weight of an entire composition or an entire dielectric layer, or 50 at% or more of a component based on the number of atoms.

Additionally, in the present disclosure, "subcomponent" may refer a component that occupies a relatively small weight ratio or atomic number ratio as compared to other components, and may refer to less than 50 wt% of a component by weight of the entire composition or the entire dielectric layer, or less than 50 at% of a component based on the number of atoms.

Hereinafter, the first to fifth subcomponents will be described in more detail.

### a) First Subcomponent

According to an example embodiment of the present disclosure, the dielectric layer 111 may further include a first subcomponent element, and the first subcomponent element may be a valence-variable acceptor element. The variable valence acceptor element may be at least one of manganese (Mn), vanadium (V), chromium (Cr), iron (Fe), cobalt (Co), nickel (Ni), copper (Cu), and zinc (Zn). This may, preferably, be at least one of manganese (Mn) and vanadium (V), and may be, more preferably, manganese (Mn) and vanadium (V).

Meanwhile, the number of mols of a first subcomponent element compared to 100 mol of a B-site element among the perovskite (ABO₃)-based main components included in the dielectric layer 111 may be 0.3 mol or more and 0.5 mol or less. For a more specific example, when the main component is barium titanate (BaTiO₃), the number of mols of the first subcomponent element compared to 100 mol of titanium (Ti) included in the dielectric layer 111 may be 0.3 mol or more and 0.5 mol or less.

The first subcomponent may be added to the dielectric layer 111 in the form of at least one of oxide or carbonate of the first subcomponent element, and as described above, the first subcomponent element may refer to a valence-variable acceptor element. When a plurality of first subcomponent elements are added, a total number of mol of the plurality of first subcomponent elements may be defined as the number of mols of the first subcomponent element.

When the number of mols of the first subcomponent element compared to 100 mol of titanium (Ti) included in the dielectric layer 111 is 0.3 mol or more and 0.5 mol or less, a sintering temperature of the dielectric layer 111 may be lowered, and the dielectric properties and high temperature accelerated lifespan characteristics may be improved.

When the number of mols of the first subcomponent element compared to 100 mol of titanium (Ti) included in the dielectric layer 111 is less than 0.3 mol, there may be a risk in that high-temperature insulation resistance characteristics may deteriorate or the X7R characteristics may not be satisfied, and when the number of mols of the first subcomponent element compared to 100 mol of titanium (Ti) is more than 0.5 mol, there may a risk in that the dielectric constant at room temperature may deteriorate.

### b) Second Subcomponent

According to an example embodiment of the present disclosure, the dielectric layer 111 may further include a second subcomponent element, and the second subcomponent element may be magnesium (Mg).

Meanwhile, the number of mols of the second subcomponent element compared to 100 mol of the B-site element among the perovskite (ABO₃)-based main components included in the dielectric layer 111 may be 0.3 mol or more and 0.5 mol or less. For a more specific example, when the main component is barium titanate (BaTiO₃), the number of mols of the second subcomponent element compared to 100 mol of titanium (Ti) included in the dielectric layer 111 may be 0.3 mol or more and 0.5 mol or less.

The second subcomponent may be added to the dielectric layer 111 in the form of at least one of oxide or carbonate of the second subcomponent element, and as described above, the second subcomponent element may refer to magnesium (Mg).

When the number of mols of the second subcomponent element compared to 100 mol of titanium (Ti) included in the dielectric layer 111 is 0.3 mol or more and 0.5 mol or less, excellent high-temperature insulation resistance characteristics may be provided and the X7R characteristics may be satisfied.

When the number of mols of the second subcomponent element compared to 100 mol of titanium (Ti) included in the dielectric layer 111 is less than 0.3 mol, the high-temperature insulation resistance characteristics may deteriorate or the X7R characteristics may not be satisfied, or the breakdown voltage (BDV) characteristics may deteriorate, and when the number of mols of the second subcomponent element compared to 100 mol of titanium (Ti) is more than 0.5 mol, there may be a risk in that the X7R characteristics may not be satisfied.

### c) Third Subcomponent

According to an example embodiment of the present disclosure, the dielectric layer 111 may further include a third subcomponent element, the third subcomponent element may be the rare earth element. The rare earth element may preferably be at least one of lanthanum (La), samarium (Sm), dysprosium (Dy), terbium (Tb), holmium (Ho), erbium (Er), and gadolinium (Gd), and may not include at least one of ytterbium (Yb) and yttrium (Y).

Meanwhile, the number of mols of the third subcomponent element compared to 100 mol of the B-site element among the perovskite (ABO₃)-based main components included in the dielectric layer 111 may be 3.5 mol or more and 5.5 mol or less. For a more specific example, when the main component is barium titanate (BaTiO₃), the number of mols of the third subcomponent element compared to 100 mol of titanium (Ti) included in the dielectric layer 111 may be 3.5 mol or more and 5.5 mol or less.

The third subcomponent may be added to the dielectric layer 111 in the form of at least one of oxide or carbonate of the third subcomponent element, and as described above, the third subcomponent element may refer to the rare earth element. When a plurality of third subcomponent elements are added, the total number of mol of the plurality of third subcomponent elements may be defined as the number of mols of the third subcomponent element.

When the number of mols of the third subcomponent element compared to 100 mol of titanium (Ti) included in the dielectric layer 111 is 3.5 mol or more and 5.5 mol or less, excellent high-temperature insulation resistance characteristics may be provided the X7R characteristics may be satisfied, breakdown voltage (BDV) characteristics may be provided, and high temperature reliability may be excellent.

When the number of mols of the third subcomponent element compared to 100 mol of titanium (Ti) included in the dielectric layer 111 is less than 3.5 mol, there may be a risk in that the high-temperature insulation resistance characteristics, the breakdown voltage (BDV) characteristics, or the high-temperature reliability may deteriorate, and when the number of mols of the third subcomponent element compared to 100 mol of titanium (Ti) is more than 5.5 mol, there may be a risk in that the room temperature dielectric constant, the loss factor (DF), the high temperature insulation resistance characteristics, or the high temperature reliability may deteriorate.

### d) Fourth Subcomponent

According to an example embodiment of the present disclosure, the dielectric layer 111 may further include a fourth subcomponent element, and the fourth subcomponent element may be at least one of barium (Ba) and calcium (Ca), and may be, preferably, barium (Ba).

Meanwhile, the number of mols of the fourth subcomponent element compared to 100 mol of the B-site element among the perovskite (ABO₃)-based main components included in the dielectric layer 111 may be 1 mol or more and 1.5 mol or less. For a more specific example, when the main component is barium titanate (BaTiO₃), the number of mols of the fourth subcomponent element compared to 100 mol of titanium (Ti) included in the dielectric layer 111 may be 1 mol or more and 1.5 mol or less. Here, when the fourth subcomponent element is the same as the A-site element of the main component, the fourth subcomponent element may be calculated excluding the number of mols of the A-site element of the main component. For example, when the fourth subcomponent is barium (Ba) and the main component is barium titanate (BaTiO₃), the number of mols of barium (Ba) compared to 100 mol of titanium (Ti) included in the dielectric layer 111 may be 101 mol or more and 101.5 mol or less, the number of mols of barium (Ba) by the fourth subcomponent element may be calculated to be 1 mol or more and 1.5 mol or less, excluding 100 mol of barium (Ba) by the main component.

The fourth subcomponent may be added to the dielectric layer 111 in the form of at least one of oxide or carbonate of the fourth subcomponent element, and as described above, the fourth subcomponent element may refer to at least one of barium (Ba) and calcium (Ca). When a plurality of fourth subcomponent elements are added, the total number of mol of the plurality of fourth subcomponent elements may be defined as the number of mols of the fourth subcomponent element.

When the number of mols of the fourth subcomponent element is 1 mol or more and 1.5 mol or less compared to 100 mol of titanium (Ti) included in the dielectric layer 111, excellent high-temperature insulation resistance characteristics may be provided and the X7R characteristics may be satisfied, and the breakdown voltage (BDV) characteristics and the high-temperature reliability may be improved.

When the number of mols of the fourth subcomponent element compared to 100 mol of titanium (Ti) included in the dielectric layer 111 is less than 1 mol, there may be a risk in that the high-temperature insulation resistance properties or the high-temperature reliability may deteriorate, and when the number of mols of the fourth subcomponent element is more than 1.5 mol compared to 100 mol of titanium (Ti), there may be a risk in that the high-temperature insulation resistance characteristics, the breakdown voltage (BDV) characteristics, or the high-temperature reliability may deteriorate.

### e) Fifth Subcomponent

According to an example embodiment of the present disclosure, the dielectric layer 111 may further include a fifth subcomponent element, and the fifth subcomponent element may be silicon (Si).

Meanwhile, the number of mols of the fifth subcomponent element compared to 100 mol of the B-site element among the perovskite (ABO₃)-based main components included in the dielectric layer 111 may be 1.1 mol or more and 3 mol or less. For a more specific example, when the main component is barium titanate (BaTiO₃), the number of mols of the fifth subcomponent element compared to 100 mol of titanium (Ti) included in the dielectric layer 111 may be 1.1 mol or more and 3 mol or less.

The fifth subcomponent may be added to the dielectric layer 111 in the form of at least one of an oxide of the fifth subcomponent element or glass including the fifth subcomponent element, and as described above, the fifth subcomponent element may refer to silicon (Si).

When the number of mols of the fifth subcomponent element compared to 100 mol of titanium (Ti) included in the dielectric layer 111 is 1.1 mol or more and 3 mol or less, excellent high-temperature insulation resistance characteristics may be provided and the X7R characteristics may be satisfied.

When the number of mols of the fifth subcomponent element compared to 100 mol of titanium (Ti) included in the dielectric layer 111 is less than 1.1 mol, the high-temperature insulation resistance characteristics or the high-temperature reliability may deteriorate, and when the number of mols of the fifth subcomponent element compared to 100 mol of titanium (Ti) is more than 3 mol, there may be a risk that the room temperature dielectric constant or the high temperature reliability characteristics may deteriorate.

A thickness td of the dielectric layer 111 is not limited.

In order to ensure reliability in a high voltage environment of the multilayer electronic component 100, the thickness of the dielectric layer 111 may be 10.0 um or less. Additionally, in order to achieve miniaturization and high capacity of the multilayer electronic component 100, the thickness of the dielectric layer 111 may be 3.0 µm or less, and in order to more easily achieve miniaturization and high capacitance, the thickness of the dielectric layer 111 may be 1.0 um or less, preferably 0.6 um or less, and more preferably 0.4 um or less.

Here, the thickness td of the dielectric layer 111 may refer to a thickness td of the dielectric layer 111 disposed between the first and second internal electrodes 121 and 122.

Meanwhile, the thickness td of the dielectric layer 111 may refer to a first directional size of the dielectric layer 111. Additionally, the thickness td of the dielectric layer 111 may refer to an average thickness td of the dielectric layer 111, and may refer to an average size of the dielectric layer 111 in the first direction.

The average size of the dielectric layer 111 in the first direction may be measured by scanning images of first and second directional cross-sections of the body 110 with a scanning electron microscope (SEM) of 10,000X magnification. More specifically, the average size of one dielectric layer 111 in the first direction may be an average value calculated by measuring the first directional size of one dielectric layer 111 at 10 points spaced apart from each other at equal intervals in the second direction in the scanned image. The 10 points spaced apart from each other at equal intervals may be designated in the capacitance formation portion Ac. Additionally, when the average value is measured by extending an average value measurement up to 10 dielectric layers 111, an average thickness of the dielectric layers 111 in the first direction may be further generalized

The internal electrodes 121 and 122 may be alternately stacked with the dielectric layer 111.

The internal electrodes 121 and 122 may include a first internal electrode 121 and a second internal electrode 122, and the first and second internal electrodes 121 and 122 may be alternately arranged to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body 110 and may be connected to the first internal electrode 121, and a second external electrode 132 may be disposed on the fourth surface 4 of the body 110 and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. In this case, the first and second internal electrodes 121 and 122 may be electrically separated from each other by the dielectric layer 111 disposed therebetween.

Meanwhile, the body 110 may be formed by alternately stacking ceramic green sheets on which the first internal electrode 121 is printed and ceramic green sheets on which the second internal electrode 122 is printed, and then sintering the ceramic green sheets.

The material included in the internal electrodes 121 and 122 is not particularly limited, and any material having excellent electrical conductivity may be used. For example, the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof.

Additionally, the internal electrodes 121 and 122 may be formed by printing a conductive paste for internal electrodes including one or more of nickel (Ni), copper (Cu), palladium (Pd), silver (Ag), gold (Au), platinum (Pt), tin (Sn), tungsten (W), titanium (Ti) and alloys thereof on the ceramic green sheet. A printing method for the conductive paste for internal electrodes may be a screen printing method or a gravure printing method, but the present disclosure is not limited thereto.

Meanwhile, a thickness te of the internal electrodes 121 and 122 is not limited.

In order to ensure the reliability of the multilayer electronic component 100 in a high voltage environment, the thickness te of the internal electrodes 121 and 122 may be 3.0 um or less. Additionally, in order to achieve miniaturization and high capacitance of the multilayer electronic component 100, the thickness of the internal electrodes 121 and 122 may be 1.0 um or less, and in order to more easily achieve ultra-miniaturization and high capacitance, the thickness of the internal electrodes 121 and 122 may be 0.6 um or less, and more preferably 0.4 um or less.

Here, the thickness te of the internal electrodes 121 and 122 may refer to a first directional size of the internal electrodes 121 and 122. Additionally, the thickness te of the internal electrodes 121 and 122 may refer to an average thickness te of the internal electrodes 121 and 122, and may refer to an average size of the internal electrodes 121 and 122 in the first direction.

The average size of the internal electrodes 121 and 122 in the first direction may be measured by scanning images of the first and second directional cross-sections of the body 110 with a scanning electron microscope (SEM) of 10,000X magnification. More specifically, the average size of one internal electrode in the first direction may be an average value calculated by measuring the first directional size of one internal electrode at 10 points spaced apart from each other at equal intervals in the second direction in the scanned image. The 10 points spaced apart from each other at equal intervals may be designated in the capacitance formation portion Ac. Additionally, when the average value is measured by extending an average value measurement up to 10 internal electrodes, an average thickness of the internal electrode in the first directional may be further generalized.

Meanwhile, in an example embodiment of the present disclosure, the average thickness td of at least one of the plurality of dielectric layers 111 and the average thickness te of at least one of the plurality of internal electrodes 121 and 122 may satisfy 2×te < td.

In other words, the average thickness td of one dielectric layer 111 may be larger than twice the average thickness te of one internal electrode 121 or 122. Preferably, the average thickness td of the plurality of dielectric layers 111 may be larger than twice the average thickness te of the plurality of internal electrodes 121 and 122.

In general, high-voltage electronic components have a major issue due to reliability issues due to a decrease in breakdown voltage (BDV) in a high-voltage environment.

Accordingly, in order to prevent a decrease in the breakdown voltage under a high voltage environment, the average thickness td of the dielectric layer 111 may be made larger than twice the average thickness te of the internal electrodes 121 and 122, so that the thickness of the dielectric layer, which is a distance between internal electrodes, may be increased, thereby improving the breakdown voltage (BDV) characteristics.

When the average thickness td of the dielectric layer 111 is less than or equal to twice the average thickness te of the internal electrodes 121 and 122, an average thickness of the dielectric layer, which is a distance between the internal electrodes, may be thin, which may reduce the breakdown voltage, and a short circuit may occur between the internal electrodes.

Meanwhile, the body 110 may include cover portions 112 and 113 disposed on both end-surfaces of the capacitance formation portion Ac in the first direction.

Specifically, the body 110 may include a first cover portion 112 disposed on one surface of the capacitance formation portion Ac in the first direction, and a second cover portion 113 disposed on the other surface of the capacitance formation portion Ac in the first direction, and more specifically, the body 110 may include an upper cover portion 112 disposed above the capacitance formation portion Ac in the first direction, and a lower cover portion 113 disposed below the capacitance formation portion Ac in the first direction.

The upper cover portion 112 and the lower cover portion 113 may be formed by stacking a single dielectric layer 111 or two or more dielectric layers 111 on upper and lower surfaces of the capacitance formation portion Ac in the first direction, respectively, and may basically serve to prevent damage to the internal electrodes 121 and 122 due to physical or chemical stress.

The upper cover portion 112 and the lower cover portion 113 do not include the internal electrodes 121 and 122, and may include the same material as the dielectric layer 111. That is, the upper cover portion 112 and the lower cover portion 113 may include a ceramic material, and may include, for example, a barium titanate (BaTiO₃)-based ceramic material.

Meanwhile, the thickness tc of the cover portions 112 and 113 is not particularly limited.

However, in order to more easily achieve miniaturization and high capacitance of the multilayer electronic component, the thickness tc of the cover portions 112 and 113 may be 100 um or less, preferably 30 um or less, and more preferably 20 um or less in ultra-small products.

Here, the thickness tc of the cover portions 112 and 113 may refer to a first directional size of the cover portions 112 and 113 in the first direction. Additionally, the thickness tc of the cover portions 112 and 113 may refer to the average thickness tc of the cover portions 112 and 113, and may refer to an average size of the cover portions 112 and 113 in the first direction.

The average size of the cover portions 112 and 113 in the first direction may be measured by scanning images of the first and second directional cross-sections of the body 110 with a scanning electron microscope (SEM) of 10,000X magnification. More specifically, the average size thereof may refer to an average value calculated by measuring the first directional size at 10 points equally spaced from each other in the second direction in the image obtained by scanning one cover portion.

Additionally, the average size of the cover portion in the first direction measured by the above-described method may have substantially the same size as the average size of the cover portion in the first direction in the first and third directional cross-sections of the body 110.

Meanwhile, the multilayer electronic component 100 may include side margin portions 114 and 115 disposed on both end-surfaces of the body 110 in the third direction.

More specifically, the side margin portions 114 and 115 may include a first side margin portion 114 disposed on the fifth surface 5 of the body 110 and a second side margin portion 115 disposed on the sixth surface 6 of the body 110.

As illustrated, the side margin portions 114 and 115 may refer to a region between the end-surfaces of the first and second internal electrodes 121 and 122 in the third direction and a boundary surface of the body 110, based on the first and third directional cross-sections of the body 110.

The side margin portions 114 and 115 may formed by applying a conductive paste to form the internal electrodes 121 and 122 except where the side margin portions 114 and 115 are to be formed on the ceramic green sheet applied to the capacitance formation portion Ac, and cutting the stacked internal electrodes 121 and 122 so that the internal electrodes 121 and 122 are exposed to the fifth and sixth surfaces 5 and 6 of the body 110 in order to suppress a step portion caused by the internal electrodes 121 and 122, and then stacking a single dielectric layer 111 or two or more dielectric layers 111 on both third directional end-surfaces of the capacitance formation portion Ac in the third direction.

The side margin portions 114 and 115 may basically serve to prevent damage to the internal electrodes 121 and 122 due to physical or chemical stress.

The first side margin portion 114 and the second side margin portion 115 do not include the internal electrodes 121 and 122 and may include the same material as the dielectric layer 111. That is, the first side margin portion 114 and the second side margin portion 115 may include a ceramic material, and may include, for example, a barium titanate (BaTiO₃) based ceramic material.

Meanwhile, a width wm of the first and second side margin portions 114 and 115 is not particularly limited.

However, in order to more easily achieve miniaturization and high capacitance of the multilayer electronic component 100, the width wm of the side margin portions 114 and 115 may be 100 um or less, preferably 30 um or less, and more preferably 20 um or less in ultra-small products.

Here, the width wm of the side margin portions 114 and 115 may refer to a third directional size of the side margin portions 114 and 115. Additionally, the width wm of the side margin portions 114 and 115 may refer to the average width wm of the side margin portions 114 and 115, and may refer to an average size of the side margin portions 114 and 115 in the third direction.

The average size of the side margin portions 114 and 115 in the third direction may be measured by scanning images of the first and third directional cross-sections of the body 110 with a scanning electron microscope (SEM) of 10,000X magnification. More specifically, the average size thereof may refer to an average value calculated by measuring the third directional size at 10 points equally spaced apart from each other in the first direction in an image obtained by scanning one side margin portion.

In an example embodiment of the present disclosure, a structure in which the ceramic electronic component 100 has two external electrodes 131 and 132 is described, but the number or shape of the external electrodes 131 and 132 may be changed depending on the shape of the internal electrodes 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Additionally, the external electrodes 131 and 132 may be disposed to extend to a portion of the first and second surfaces 1 and 2 of the body 110, and may also be disposed to extend to a portion of the fifth and sixth surfaces 5 and 6 of the body 110. That is, the first external electrode 131 may be disposed on a portion of the first, second, fifth, and sixth surfaces 1, 2, 5 and 6 of the body 110 and disposed on the third surface 3 of the body 110, and the second external electrode 132 may disposed on a portion of the first, second, fifth and sixth surfaces 1, 2, 5 and 6 of the body 110 and disposed on the third surface 3 of the body 110.

Meanwhile, the external electrodes 131 and 132 may be formed using any material as long as the material has electrical conductivity, such as a metal, and the specific material may be determined in consideration of electrical properties, structural stability, and the like, and the external electrodes 131 and 132 may further have a multilayer structure.

For example, the external electrodes 131 and 132 may include an electrode layer disposed on the body 110 and a plating layer disposed on the electrode layer.

For a more specific example of the electrode layer, the electrode layer may include first electrode layers 131a and 132a, sintered electrodes including a first conductive metal and glass, or may include second electrode layers 131b and 132b, resin-based electrodes including a second conductive metal and a resin.

Here, a first conductive metal may refer to a conductive metal included in the first electrode layers 131a and 132a, and a second conductive metal may refer to a conductive metal included in the second electrode layers 131b and 132b. In this case, the first conductive metal and the second conductive metal may be identical to or different from each other, and when a plurality of conductive metals are included, the same conductive metal may be only partially included, but the present disclosure is not limited thereto.

Additionally, the electrode layers 131a, 132a, 131b and 132b may be formed by sequentially forming the sintered electrodes and the resin-based electrodes on the body.

Additionally, the electrode layers 131a, 132a, 131b and 132b may be formed by transferring a sheet including a conductive metal onto the body, or may be formed by transferring a sheet including the conductive metal onto the sintered electrode.

The material having excellent electrical conductivity may be used as conductive metals included in the electrode layers 131a, 132a, 131b and 132b, and for example, the conductive metals may include one or more selected from the group consisting of nickel (Ni), copper (Cu), palladium (Pd), silver (Ag), gold (Au), platinum (Pt), tin (Sn), tungsten (W), titanium (Ti) and alloys thereof, but the present disclosure is not limited thereto.

In an example embodiment of the present disclosure, the electrode layers 131a, 132a, 131b and 132b may have a bilayer structure including the first electrode layers 131a and 132a and the second electrode layers 131b and 132b, and thus, the external electrodes 131 and 132 may include the first electrode layers 131a and 132a including a first conductive metal and glass, and the second electrode layers 131b and 132b disposed on the first electrode layers 131a and 132a and including a second conductive metal and a resin.

The first electrode layers 131a and 132a may serve to improve adhesion to the body 110 by including glass, and the second electrode layers 131b and 132b may serve to improve bending strength by including the resin.

The first conductive metal used in the first electrode layers 131a and 132a is not particularly limited as long as the first conductive metal has a material that may be electrically connected to the internal electrodes 121 and 122 to form electric capacity, and the first conductive metal may include, for example, one or more selected from the group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to first conductive metal particles and then sintering the conductive paste.

The second conductive metal included in the second electrode layers 131b and 132b may serve to electrically connect to the first electrode layers 131a and 132a.

The second conductive metal included in the second electrode layers 131b and 132b is not particularly limited as long as the second conductive metal has a material that may be electrically connected to the electrode layers 131a and 132a, and the second conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles and flake-shaped particles. That is, the second conductive metal may consist only of flake-shaped particles or only spherical particles, and may be a mixture of flake-shaped particles and spherical particles. Here, the spherical particle may include a shape that is not entirely spherical, for example, a shape in which a length ratio of a major axis and a minor axis (major axis/minor axis) is 1.45 or less. The flake-shaped particles may refer to particles with a flat and elongated shape, and the present disclosure is not limited thereto, but the length ratio of the major axis and the minor axis (major axis/minor axis) may be, for example, 1.95 or more. The lengths of the major and minor axes of the spherical particles and the flake-shaped particles may be measured from images obtained by scanning first and second directional cross-sections cut from the central portion of the multilayer electronic component in the third direction with the scanning electron microscope (SEM).

The resin included in the second electrode layers 131b and 132b may ensure bonding properties and serve as shock absorbers. The resin included in the second electrode layers 131b and 132b may have bonding properties and shock absorption properties, and the resin is not particularly limited as long as the resin may be mixed with the second conductive metal particles to make a paste, and may include, for example, an epoxy-based resin.

Additionally, the second electrode layers 131b and 132b may include a plurality of second conductive metal particles, an intermetallic compound, and a resin. The intermetallic compound may be included to further improve electrical connectivity with the first electrode layers 131a and 132a. The intermetallic compound may serve to improve electrical connectivity by connecting a plurality of metal particles, and may serve to surround the plurality of metal particles and connect the metal particles to each other.

In this case, the intermetallic compound may include a metal having a melting point lower than a curing temperature of the resin. That is, because the intermetallic compound includes the metal having the melting point lower than the curing temperature of the resin, the metal having the melting point lower than the curing temperature of the resin is melted during a drying and curing process, and an intermetallic compound with a portion of the metal particles is formed to surround the metal particle. In this case, the intermetallic compound may preferably include a low melting point metal of 300 °C or lower.

For example, the intermetallic compound may include Sn, which has a melting point of 213 to 220 °C. Sn is melted during the drying and curing process, and the melted Sn wets high melting point metal particles such as Ag, Ni or Cu through capillary action, and reacts with some of Ag, Ni or Cu metal particles to form intermetallic compounds such as Ag₃Sn, Ni₃Sn₄, Cu₆Sn₅ and Cu₃Sn. Ag, Ni or Cu that did not participate in the reaction remain in the form of metal particles.

Accordingly, the plurality of second conductive metal particles may include one or more of Ag, Ni, and Cu, and the intermetallic compound may include one or more of Ag₃Sn, Ni₃Sn₄, Cu₆Sn₅ and Cu₃Sn.

The plating layers 131c and 132c may serve to improve mounting characteristics.

The types of plating layers 131c and 132c are not particularly limited, and the plating layers 131c and 132c may be a single layer of plating layers 131c and 132c including one or more of nickel (Ni), tin (Sn), silver (Ag), palladium (Pd) and alloys thereof, or may be formed of a plurality of layers.

For more specific examples of the plating layers 131c and 132c, the plating layers 131c and 132c may be Ni plating layers or Sn plating layers, and although not illustrated, the plating layers 131c and 132c may be in the form in which a Ni plating layer and an Sn plating layer are sequentially formed on the electrode layer, and may be in the form in which the Sn plating layer, the Ni plating layer, and the Sn plating layer are formed sequentially. Additionally, the plating layers 131c and 132c may include a plurality of Ni plating layers and/or a plurality of Sn plating layers.

There is no need to specifically limit the size of the multilayer electronic component 100.

However, in order to achieve both miniaturization and high capacitance, the thickness of the dielectric layer and internal electrodes must be thinned to increase the number of stacked layers, and thus, the effect according to the present disclosure may be more noticeable in the multilayer electronic component 100 having a size of 3216 (length × width: 3.2 mm × 1.6 mm) or less.

Hereinafter, the present disclosure will be described in more detail through examples but this is intended to help the specific understanding of the invention, and the scope of the present disclosure is not limited by an example embodiment.

### <Example Embodiment>

Tables 1, 3 and 5 show RE type of the third subcomponent (where RE represents rare earth elements and the type of added rare earth elements, added in the form of oxides), a sintering temperature, sintering time, sintering atmosphere, and the content of the added first to fifth subcomponent elements. The number of mols of the first to fifth subcomponent elements is expressed based on 100 mol of BaTiO₃, the main component, and all of the first to fifth subcomponent elements correspond to a reference for elements other than oxides. For example, in Inventive Example 1-1, the addition of 3.5 mol of the third subcomponent may denote that 3.5 mol of lanthanum (La), a rare earth element, was added as compared to 100 mol of BaTiO₃, the main component.

BaTiO₃ powder particles having an average particle size of 200 nm was used as a main component base material. By utilizing zirconia beads as a mixing/dispersing medium, the main component, BaTiO₃ powder particles and raw material powder particles including the subcomponent corresponding to a composition specified in Tables 1, 3 and 5 were mixed with ethanol/toluene solvent and dispersant, milled for 12 hours, mixed with a binder, and then further milled for 12 hours to prepare a slurry. The slurry prepared in this manner was used to manufacture a molded sheet having a thickness of 5.0 um using a sheet manufacturing molding machine. Then, nickel (Ni) internal electrodes were printed on the molded sheet. The upper and lower cover portions were manufactured by stacking 25 layers and 22 layers of printed active sheets were pressed and stacked to manufacture a bar. The pressed bar was cut into chips of size 3216 (length × width: 3.2 mm × 1.6 mm) using a cutter. After performing plasticizing on the 3216 size MLCC chip that has been manufactured, the 3216 size MLCC chip was sintered in a reducing atmosphere of 0.1% H₂ / 99.9% N₂ to 0.7% H₂ / 99.5% N₂ (H₂O/H₂/N₂ atmosphere) at a temperature of 1200°C to 1260°C at a holding time of 2 hours, and was subjected to re-oxidation for 3 hours in a N₂ atmosphere at 1080°C. Here, 0.1% H₂ concentration corresponds to a condition of electromotive force of 680 mV in an oxygen partial pressure meter, and 0.7% H₂ concentration corresponds to a condition of electromotive force of 780 mV. For the sintered chip, external electrodes were completed through a termination process and electrode sintering using a copper (Cu) paste. Accordingly, an MLCC chip of size 3216 in which a thickness of the dielectric layer after sintering was approximately 2.4 um and the number of layers of the dielectric layer between the internal electrodes was 20 was manufactured.

A/(A+B) and A+B in Tables 2, 4, and 6 represent a ratio (A/(A+B)) of the number (A) of first secondary phase grains to a sum (A+B) of the number (A) of first secondary phase grains (which may be referred to as RTO) including in the dielectric layer (excluding the internal electrode) in the 1.85 um × 1.85 um cross-sectional area of the capacitance formation portion Ac and the number (B) of second secondary phase grains (which may be referred to as RSO), based on the first and second directional cross-sections from the third directional center of the body 110.

A room temperature dielectric constant and a DF (dielectric loss coefficient) was recorded by measuring capacitance or a capacitance change rate of room temperature capacitance of the MLCC chip using an LCR meter at 1 kHz and AC 0.5 V/um, and calculating a dielectric constant of a MLCC chip dielectric from capacity, a dielectric layer thickness of the MLCC chip, an area of the internal, and the number of stacked layers of the dielectric layer. When the room temperature dielectric constant was 1500 or more, the room temperature dielectric constant was evaluated as excellent, and when the room temperature dielectric constant was less than 1500, the room temperature dielectric constant was evaluated as defective, and when the DF was 1.5% or more, the DF was evaluated as excellent, and when the DF was less than 1.5%, the DF was evaluated as defective.

IR (high temperature insulation resistance) was recorded by taking 10 samples and measuring the insulation resistance value after curing for 60 seconds at a temperature of 150 °C in a state of applying DC 30 V/µm. When the IR was 3.0E+5 Ω or higher, the IR was evaluated as excellent, and when the was less than 3.0E+5 Q, the IR was evaluated as defective.

TCC (change in capacitance according to temperature) was recorded by measuring a change rate of the capacity in a temperature range from -55 °C to 125 °C based on the capacity at 25 °C. When the change rate of the capacity was -15% or more and +15% or less in the temperature range from -55 °C to 125 °C, the TCC characteristics were evaluated as excellent, and when the change rate of the capacity exceeded this limit, the TCC characteristics were evaluated as defective.

BDV (Breakdown Voltage) was recorded by measuring voltage (V) at the time of performing chip destruction when the voltage is gradually increased at a voltage increase rate of 10 V/0.1s based on an initial voltage of 0 V for the chip.

Mean Time to Failure (MTTF) was conducted through Highly Accelerated Life Assessment (HALT) and was calculated by measuring the time (hr) at which failure occurs by applying a voltage corresponding to an electric field of 42 V/µm at 150 °C to 40 specimens in each example.

When evaluating MLCC chip characteristics, characteristics in which the room temperature dielectric constant is 1500 or more, characteristics in which the dielectric loss coefficient (DF) is 1.5% or more, characteristics in which the breakdown voltage (BDV) is 350 V or more, characteristics in which the Mean Time to Failure (MTTF) is 200 hours or more under Highly Accelerated Life Assessment (HALT) conditions of applying an electric field of 42 V/µm at a temperature of 150 °C, characteristics of insulation resistance (IR, high temperature insulation resistance) is 3.0E+5 Ω or more at a temperature of 150 °C, and the X7R characteristics (characteristics satisfying the capacity of -15% or more and 15% or less in a temperature range of -55 °C or more and 125 °C or less based on the capacity at 25 °C), which is the capacity change rate (TCC) according to the target temperature were evaluated as in preferred example embodiments.

**Table 1:**

| Exampl e | RE Type of Third Subcompo nent | Sinteri ng Temper ature (°C) | Sinterin g Time (hr) | Sintering Atmospher e EMF @850°C | First Subcomponent element | | Second Subcompo nent element | Third Subcomp onent element | Fourth Subcomp onent element | Fifth Subcomp onent element |
|---|---|---|---|---|---|---|---|---|---|---|
| | | | | | Mn | V | Mg | RE | Ba | Si |
| | | | | (mV) | (mol) | | | | | |
| 1-1 | La₂O₃ | 1230 | 1.5 | 780 | 0.2 | 0.2 | 0.5 | 3.5 | 1.0 | 1.4 |
| 1-2 | Sm₂O₃ | 1230 | 1.5 | 780 | 0.2 | 0.2 | 0.5 | 3.5 | 1.0 | 1.4 |
| 1-3 | Dy₂O₃ | 1230 | 1.5 | 780 | 0.2 | 0.2 | 0.5 | 3.5 | 1.0 | 1.4 |
| 1-4 | Tb₄O₇ | 1230 | 1.5 | 780 | 0.2 | 0.2 | 0.5 | 3.5 | 1.0 | 1.4 |
| 1-5 | Ho₂O₃ | 1230 | 1.5 | 780 | 0.2 | 0.2 | 0.5 | 3.5 | 1.0 | 1.4 |
| 1-6 | Er₂O₃ | 1230 | 1.5 | 780 | 0.2 | 0.2 | 0.5 | 3.5 | 1.0 | 1.4 |
| 1-7 | Gd₂O₃ | 1230 | 1.5 | 780 | 0.2 | 0.2 | 0.5 | 3.5 | 1.0 | 1.4 |
| 1-8 | Yb₂O₃ | 1230 | 1.5 | 780 | 0.2 | 0.2 | 0.5 | 3.5 | 1.0 | 1.4 |
| | | | | | | | | | | |
| 2-1 | Dy₂O₃ | 1190 | 1.5 | 780 | 0.2 | 0.2 | 0.5 | 3.5 | 1.0 | 1.4 |
| 2-2 | Dy₂O₃ | 1210 | 1.5 | 780 | 0.2 | 0.2 | 0.5 | 3.5 | 1.0 | 1.4 |
| 2-3 | Dy₂O₃ | 1250 | 1.5 | 780 | 0.2 | 0.2 | 0.5 | 3.5 | 1.0 | 1.4 |
| 2-4 | Dy₂O₃ | 1270 | 1.5 | 780 | 0.2 | 0.2 | 0.5 | 3.5 | 1.0 | 1.4 |
| | | | | | | | | | | |
| 3-1 | Dy₂O₃ | 1230 | 2 | 780 | 0.2 | 0.2 | 0.5 | 3.5 | 1.0 | 1.4 |
| 3-2 | Dy₂O₃ | 1230 | 3 | 780 | 0.2 | 0.2 | 0.5 | 3.5 | 1.0 | 1.4 |
| | | | | | | | | | | |
| 4-1 | Dy₂O₃ | 1230 | 1.5 | 740 | 0.2 | 0.2 | 0.5 | 3.5 | 1.0 | 1.4 |
| 4-2 | Dy₂O₃ | 1230 | 1.5 | 760 | 0.2 | 0.2 | 0.5 | 3.5 | 1.0 | 1.4 |
| 4-3 | Dy₂O₃ | 1230 | 1.5 | 800 | 0.2 | 0.2 | 0.5 | 3.5 | 1.0 | 1.4 |

**Table 2:**

| Example | Prototype MLCC Chip Characteristics | | | | | | | | |
|---|---|---|---|---|---|---|---|---|---|
| | A/(A+B) | A+B | Room temperatu re Dielectric Constant | DF (%) | IR (Ω) @150 °C | TCC (%) @-55 °C | TCC (%) @125 °C | BDV (V) | MTTF (hr) @ 150 °C, @ 42 V/um |
| 1-1 | 0.25 | 8 | 2153 | 2.13 | 5.9E+05 | -12.9 | -14.8 | 385 | 230 |
| 1-2 | 0.33 | 9 | 2084 | 2.26 | 6.4E+05 | -13.5 | -14.1 | 395 | 225 |
| 1-3 | 0.17 | 6 | 2129 | 2.08 | 6.2E+05 | -13.3 | -14.2 | 389 | 241 |
| 1-4 | 0.29 | 7 | 2081 | 2.24 | 4.8E+05 | -14.1 | -13.9 | 386 | 219 |
| 1-5 | 0.25 | 8 | 2119 | 2.17 | 5.3E+05 | -14.2 | -14.1 | 374 | 224 |
| 1-6 | 0.33 | 6 | 2163 | 2.22 | 5.7E+05 | -13.8 | -14.5 | 383 | 216 |
| 1-7 | 0.14 | 7 | 2072 | 2.2 | 5.2E+05 | -12.8 | -14.4 | 390 | 224 |
| 1-8 | 0.60 | 5 | 2103 | 2.5 | 6.5E+05 | -13.5 | -14.3 | 374 | 87 |
| | | | | | | | | | |
| 2-1 | 0.43 | 7 | 1841 | 1.78 | 6.0E+05 | -13.7 | -13.7 | 342 | 142 |
| 2-2 | 0.2 | 5 | 2086 | 2.02 | 5.70E+05 | -13.8 | -13.5 | 370 | 221 |
| 2-3 | 0.4 | 5 | 2215 | 2.11 | 3.5E+05 | -14.2 | -13.5 | 387 | 208 |
| 2-4 | 1 | 6 | 2463 | 2.62 | 1.20E+05 | -14.5 | -12.8 | 335 | 69 |
| | | | | | | | | | |
| 3-1 | 0.2 | 6 | 2105 | 2.11 | 4.80E+05 | -13.7 | -14.4 | 377 | 215 |
| 3-2 | 1 | 7 | 2358 | 2.54 | 1.50E+05 | -14.1 | -13.6 | 321 | 54 |
| | | | | | | | | | |
| 4-1 | 0.25 | 8 | 2007 | 1.99 | 5.40E+05 | -15 | -13.2 | 371 | 230 |
| 4-2 | 0.25 | 8 | 2049 | 2.01 | 6.80E+05 | -13.1 | -14.9 | 385 | 230 |
| 4-3 | 0.17 | 6 | 2195 | 2.11 | 5.50E+05 | -13.4 | -14.6 | 381 | 235 |

Hereinafter, Table 1 and Table 2 will be described. Examples 1-1 to 1-8 in Table 1 illustrate example embodiments according to the 8 types of third subcomponent (RE₂O₃) (La₂O₃, Sm₂O₃, Dy₂O₃, Tb₄O₇, Ho₂O₃, Er₂O₃, Gd₂O₃, Yb₂O₃) when a sum of Mn and V which are valence variable acceptor elements as the first subcomponent elements, for 100 mol of the main component BaTiO₃ base material is 0.4 mol (0.2 mol of Mn, and 0.2 mol of V), the content of Mg as the second subcomponent element is 0.5 mol, the content of RE as the third subcomponent element is 3.5 mol, the content of Ba as the fourth subcomponent element is 1.0 mol, and the content of Si as the fifth subcomponent element is 1.4 mol. Additionally, in this case, the sintering temperature was 1230°C, and the firing sintering was 1.5 hr, and an atmosphere of EMF 780 mV (hydrogen concentration 0.7%) was applied.

Examples 1-1 to 1-8 in Table 2 illustrates the chip characteristics of the prototype MLCC samples corresponding to such examples. Examples 1-1 to 1-7 all meet target prototype MLCC chip characteristics, but since Yb₂O₃ of Example 1-8 has an MTTF value of only 87 hr, Example 1-8 does not meet the determination standard of 200 hr. When a random area of 1.85 um × 1.85 um that did not include the internal electrode by applying Yb₂O₃ was observed, the number of secondary phase grains (A+B) was found to be 5, and in this case, a ratio of A/(A+B) was 0.6, from which it may be seen that rapid deterioration occurred because an amount of A was more than that of B.

Examples 2-1 to 2-4 illustrates Examples of applying sintering temperatures of 1190 °C, 1210 °C, 1250 °C, and 1270 °C when the third subcomponent Dy₂O₃ was applied. When the sintering was performed at 1190 °C, which is lower than the standard sintering temperature of 1230 °C, as in Example 2-1. the number of secondary phase grains (A+B) in an observation area (1.85 um × 1.85 µm) was found to be 7, and the ratio of A/(A+B) was 0.43, it can be seen that the amount of A was generated to be more than that of B. In this case, the MTTF was 142 hr, which did not meet the determination standard, which may be expected because solid solution of an additive did not sufficiently occur. When the sintering was performed at 1210 °C in Example 2-2, the number of secondary phase grains (A+B) in the observation area was 5, and the ratio of A/(A+B) was 0.2, so that it may be seen that the amount of A was generated to be less than that of B. It may be seen that all characteristics, including MTTF, meet the characteristic determination. It may be seen that even if the sintering temperature is increased by 1250 °C, the characteristics of the prototype MLCC chip were met. Under a sintering condition of 1270 °C in Example 2-4, it may be seen that an IR value was 1.2E+05 Ω, and the IR value was decreased compared to 1230 °C. Additionally, it may be seen that the BDV and the MTTF also fall short of the determination standard. It may be seen that rapid MTTF degradation occurred because IR degradation due to excessive donor-doped and observed secondary phase grains are all first secondary phase grains.

Examples 3-1 and 3-2 are results when the sintering time was increased from 1.5 hr to 2 hr and 3 hr, respectively when applying the third subcomponent Dy₂O₃ at the sintering temperature of 1230 °C and at the EMF of 780 mV. In the case of Example 3-1, the MTTF was decreased from 241 hr, the MTTF of Example 1-3, to 215 hr, but the MTTF met the determination standard. In the case of 3 hr holding time in Example 3-2, it may be seed that the number (A+B) of secondary phase grains was observed to be 7, and all were observed as first secondary phase grains, and accordingly, rapid deterioration occurred and the MTTF was limited to 54 hr, which did not meet the determination standard.

Examples 4-1, 4-2 and 4-3 are example embodiment when the EMF was changed to 740 mV (hydrogen concentration 0.3%), 760 mV (hydrogen concentration 0.5%), and 800 mV (hydrogen concentration 1.0%) when applying the third subcomponent Dy₂O₃ at the sintering temperature of 1230 °C and at the sintering time of 1.5 hr. Under the hydrogen concentration condition of 0.3% in Example 4-1, it may be seen that the number (A+B) of secondary phase grains was 8, and the ratio of A/ (A+B) was 0.25, which meets to the determination of the number and ratio of secondary phase grains, and the MTTF was also 230 hr, which meets the characteristic determination. It can be seen that at the EMF of 760 mV in Example 4-2, all characteristics meet the determination standard. In the EMF of 800 mV in Example 4-3, since the number (A+B) of secondary phase grains in the observation area (1.85 um × 1.85 µm) was decreased to 6, and the ratio of A/(A+B) reached 0.4 or less, the MTTF also does not decrease significantly to show 235 hr. As the reducing atmosphere increases, the solid solution of the additive is strengthened and the frequency of secondary phase grain formation decreases, and thus, the number (A+B) of secondary phase grains appears to have decreased. Further enhanced reducing atmosphere sintering may cause a decrease in IR-level due to an increase in leakage current. Accordingly, in order to implement the target characteristics of the present disclosure, it may be seed that the target characteristics may be implemented under the conditions in which the third subcomponent corresponds to La₂O₃, Sm₂O₃, Dy₂O₃, Tb₄O₇, Ho₂O₃, Er₂O₃, and Gd₂O₃, and the sintering temperature is 1230 °C or 1250 °C, the sintering time is 1.5 hr or 2 hr, and the EMF is maintained between 740 mV (hydrogen concentration 0.3%) and 800 mV (hydrogen concentration 1.0%), and the ratio of A/(A+B) ratio is 0.4 or less.

From Tables 1 and 2, it may be seen that when the sintering temperature was relatively high or the sintering holding time is long, the amount of A was generated to be more than that of B or all were observed only as first secondary phase grains. Increased sintering temperature and holding time caused agglomeration of first secondary phase grains to increase the total number of secondary phase grains, but at the same time, the second secondary phase grains were found to be converted into first secondary phase grains, from it may be seen that there was no significant change in the total number of secondary phase grains. Because the electric field is concentrated on the additionally enlarged first secondary phase grains, faster movement of charge and oxygen vacancies is expected, which is expected to lead to rapid semiconducting and a rapid decrease in the MTTF.

**Table 3:**

| Exampl e | RE Type of Third Subcompo nent | Sinterin g Temper ature (°C) | Sinteri ng Time (hr) | Sintering Atmosphere EMF @850°C | First Subcomponent element | | Second Subcomp onent element | Third Subcomp onent element | Fourth Subcomp onent element | Fifth Subcompo nent element |
|---|---|---|---|---|---|---|---|---|---|---|
| | | | | | Mn | V | Mg | RE | Ba | Si |
| | | | | (mV) | (mol) | | | | | |
| 5-1 | Dy₂O₃ | 1230 | 1.5 | 780 | 0.1 | 0.2 | 0.5 | 3.5 | 1.0 | 1.4 |
| 5-2 | Dy₂O₃ | 1230 | 1.5 | 780 | 0.3 | 0.2 | 0.5 | 3.5 | 1.0 | 1.4 |
| 5-3 | Dy₂O₃ | 1230 | 1.5 | 780 | 0.2 | 0.1 | 0.5 | 3.5 | 1.0 | 1.4 |
| 5-4 | Dy₂O₃ | 1230 | 1.5 | 780 | 0.2 | 0.3 | 0.5 | 3.5 | 1.0 | 1.4 |
| | | | | | | | | | | |
| 6-1 | Dy₂O₃ | 1230 | 1.5 | 780 | 0.2 | 0.2 | 0.1 | 3.5 | 1.0 | 1.4 |
| 6-2 | Dy₂O₃ | 1230 | 1.5 | 780 | 0.2 | 0.2 | 0.3 | 3.5 | 1.0 | 1.4 |
| 6-3 | Dy₂O₃ | 1230 | 1.5 | 780 | 0.2 | 0.2 | 0.4 | 3.5 | 1.0 | 1.4 |
| 6-4 | Dy₂O₃ | 1230 | 1.5 | 780 | 0.2 | 0.2 | 0.6 | 3.5 | 1.0 | 1.4 |
| 6-5 | Dy₂O₃ | 1230 | 1.5 | 780 | 0.2 | 0.2 | 0.9 | 3.5 | 1.0 | 1.4 |

**Table 4:**

| Example | Prototype MLCC Chip Characteristics | | | | | | | | |
|---|---|---|---|---|---|---|---|---|---|
| | A/(A+B) | A+B | Room temperatu re Dielectric Constant | DF (%) | IR (Ω) @150 °C | TCC (%) @-55 °C | TCC (%) @125 °C | BDV (V) | MTTF (hr) @ 150 °C, @ 42 V/um |
| 5-1 | 0.17 | 6 | 2119 | 2.05 | 3.8E+05 | -13.3 | -14.1 | 373 | 214 |
| 5-2 | 0.28 | 7 | 2131 | 2.2 | 4.3E+05 | -14.9 | -14.1 | 385 | 237 |
| 5-3 | 0.25 | 8 | 2150 | 2.15 | 4.1E+05 | -14.5 | -15 | 365 | 223 |
| 5-4 | 0.17 | 6 | 1968 | 2.86 | 4.5E+05 | -14.6 | -14.8 | 394 | 230 |
| | | | | | | | | | |
| 6-1 | 0.25 | 4 | 2543 | 2.7 | 2.8E+05 | -16.1 | -13.6 | 335 | 207 |
| 6-2 | 0.17 | 6 | 2448 | 2.51 | 5.1E+05 | -14.7 | -14 | 366 | 217 |
| 6-3 | 0.17 | 6 | 2367 | 2.33 | 5.7E+06 | -14.1 | -14.6 | 382 | 230 |
| 6-4 | 0.14 | 7 | 2011 | 1.94 | 6.40E+05 | -13.3 | -15.2 | 385 | 254 |
| 6-5 | 0.17 | 6 | 1760 | 1.65 | 5.80E+05 | -11.4 | -15.9 | 370 | 231 |

Examples 5-1 to 6-5 in Table 3 are example embodiment when the contents of the first subcomponent elements (Mn and V) and the second subcomponent element (Mg) were changed in 100 mol of the main component BaTiO₃ base material, and the contents of the third subcomponent (Dy) element, the fourth subcomponent (Ba) element, and the fifth subcomponent (Si) element were maintained at 3.5 mol, 1.0 mol, and 1.4 mol, respectively. Examples 5-1 to 5-4 illustrate the characteristics when the first subcomponent elements, Mn and V, were respectively decreased from 0.2 mol to 0.1 mol or were increased by 0.3 mol. Example 5-1 illustrates the characteristics when Mn was decreased to 0.1 mol and V was maintained at 0.2 mol, and it may be seen that the ratio of A/(A+B) ratio was 0.17, and all characteristics were satisfied. Example 5-2 illustrates the characteristics when Mn was increased by 0.3 mol and V was maintained at 0.2 mol. When Mn was further increased, the IR, the BDV and the MTTF were further improved, and the side effect of worsening the TCC at low temperatures occurred. Example 5-3 illustrates an example embodiment when Mn was maintained at 0.2 mol and V is decreased to 0.1 mol, and the ratio of A/(A+B) satisfied 0.25 and all other characteristics were determined to be good. Example 5-4 illustrates the characteristics when Mn was maintained at 0.2 mol and V was increased by 0.1 mol (total 0.3 mol), from which it may be seen that the dielectric constant at room temperature was decreased compared to Example 5-3, but the remaining characteristics, including MTTF, are similar thereto.

Examples 6-1 to 6-5 illustrate the characteristics of the prototype MLCC chip when the second subcomponent element, Mg, was 0.1 mol, 0.3 mol, 0.4 mol, 0.6 mol, and 0.9 mol. In Example 6-1, when the Mg content was 0.1 mol, it may be seen that the number (A+B) of secondary phase grains in the observation area (1.85 um × 1.85 µm) was less than 5, which was 4, and a level the IR was 2.8E+05 Q, which is lower than a standard value, showing that the TCC and the BDV at the low temperatures were inferior. However, it may be seen that the MTTF was 207 hr, which was higher than the standard value. In Example 6-2, when Mg was decreased to 0.3 mol, it may be seen that the ratio of A/ (A+B) was observed to be 0.17, and the number (A+B) of secondary phase grains was observed to be 6, showing that all characteristics were greater than or equal to the standard value. In Example 6-3, all characteristics may be seen to be satisfied as in Example 6-2. In Example 6-4, all characteristics may be seen to be greater than or equal to the standard value except for the TCC at the high temperature of 125 °C. Example 6-5 illustrates chip characteristics when Mg was increased by 0.9 mol, and there was no significant change in the ratio of A/(A+B) as in other examples, but it may be seen that the MTTF was increased by 261 hr. However, it may be seen that the TCC at the high temperature further deteriorates due to the influence of grain growth inhibition, as in Example 6-4. Additionally, the decrease in the MTTF, the BDV, and the high-temperature IR is expected to be due to the formation of secondary phase grains of increased Mg. It is considered that it may be desirable to view Examples 5-1 to 5-4 and 6-1 to 6-5 of the present disclosure as reference values for characteristics through adjustment of the first subcomponent rather than as examples for determining characteristics.

**Table 5:**

| Exampl e | RE Type of Third Subcompo nent | Sinterin g Temper ature (°C) | Sinteri ng Time (hr) | Sintering Atmosphere EMF @850°C | First Subcomponent element | | Second Subcomp onent element | Third Subcomp onent element | Fourth Subcomp onent element | Fifth Subcomp onent element |
|---|---|---|---|---|---|---|---|---|---|---|
| | | | | | Mn | V | Mg | RE | Ba | Si |
| | | | | (mV) | (mol) | | | | | |
| 7-1 | Dy₂O₃ | 1230 | 1.5 | 780 | 0.2 | 0.2 | 0.5 | 1.5 | 1.0 | 1.4 |
| 7-2 | Dy₂O₃ | 1230 | 1.5 | 780 | 0.2 | 0.2 | 0.5 | 2 | 1.0 | 1.4 |
| 7-3 | Dy₂O₃ | 1230 | 1.5 | 780 | 0.2 | 0.2 | 0.5 | 2.5 | 1.0 | 1.4 |
| 7-4 | Dy₂O₃ | 1230 | 1.5 | 780 | 0.2 | 0.2 | 0.5 | 4.5 | 1.0 | 1.4 |
| 7-5 | Dy₂O₃ | 1230 | 1.5 | 780 | 0.2 | 0.2 | 0.5 | 5.5 | 1.0 | 1.4 |
| 7-6 | Dy₂O₃ | 1230 | 1.5 | 780 | 0.2 | 0.2 | 0.5 | 6.5 | 1.0 | 1.4 |
| | | | | | | | | | | |
| 8-1 | Dy₂O₃ | 1230 | 1.5 | 780 | 0.2 | 0.2 | 0.5 | 3.5 | 0.25 | 1.4 |
| 8-2 | Dy₂O₃ | 1230 | 1.5 | 780 | 0.2 | 0.2 | 0.5 | 3.5 | 0.50 | 1.4 |
| 8-3 | Dy₂O₃ | 1230 | 1.5 | 780 | 0.2 | 0.2 | 0.5 | 3.5 | 0.75 | 1.4 |
| 8-4 | Dy₂O₃ | 1230 | 1.5 | 780 | 0.2 | 0.2 | 0.5 | 3.5 | 1.25 | 1.4 |
| 8-5 | Dy₂O₃ | 1230 | 1.5 | 780 | 0.2 | 0.2 | 0.5 | 3.5 | 1.50 | 1.4 |
| 8-6 | Dy₂O₃ | 1230 | 1.5 | 780 | 0.2 | 0.2 | 0.5 | 3.5 | 2.50 | 1.4 |
| 8-7 | Dy₂O₃ | 1230 | 1.5 | 780 | 0.2 | 0.2 | 0.5 | 3.5 | 3.50 | 1.4 |
| | | | | | | | | | | |
| 9-1 | Dy₂O₃ | 1230 | 1.5 | 780 | 0.2 | 0.2 | 0.5 | 3.5 | 1.00 | 0.5 |
| 9-2 | Dy₂O₃ | 1230 | 1.5 | 780 | 0.2 | 0.2 | 0.5 | 3.5 | 1.00 | 0.8 |
| 9-3 | Dy₂O₃ | 1230 | 1.5 | 780 | 0.2 | 0.2 | 0.5 | 3.5 | 1.00 | 1.1 |
| 9-4 | Dy₂O₃ | 1230 | 1.5 | 780 | 0.2 | 0.2 | 0.5 | 3.5 | 1.00 | 1.7 |
| 9-5 | Dy₂O₃ | 1230 | 1.5 | 780 | 0.2 | 0.2 | 0.5 | 3.5 | 1.00 | 2 |
| 9-6 | Dy₂O₃ | 1230 | 1.5 | 780 | 0.2 | 0.2 | 0.5 | 3.5 | 1.00 | 3 |

**Table 6:**

| Example | Prototype MLCC Chip Characteristics | | | | | | | | |
|---|---|---|---|---|---|---|---|---|---|
| | A/(A+B) | A+B | Room temperatu re Dielectric Constant | DF (%) | IR (Ω) @150 °C | TCC (%) @-55 °C | TCC (%) @125 °C | BDV (V) | MTTF (hr) @ 150 °C, @ 42 V/um |
| 7-1 | 0 | 0 | 3318 | 4.4 | 1.2E+05 | -14.1 | -14.3 | 319 | 177 |
| 7-2 | 0.33 | 3 | 3401 | 4.8 | 2.7E+05 | -14.1 | -14.4 | 331 | 206 |
| 7-3 | 0.25 | 4 | 3551 | 5.1 | 7.40E+05 | -14.3 | -14.2 | 347 | 219 |
| 7-4 | 0.14 | 7 | 2046 | 2.1 | 4.80E+05 | -14.5 | -14 | 394 | 250 |
| 7-5 | 0.36 | 11 | 1893 | 1.92 | 3.20E+05 | -15.1 | -13.5 | 375 | 233 |
| 7-6 | 0.45 | 20 | 1462 | 1.47 | 8.90E+04 | -15.6 | -13.1 | 358 | 185 |
| | | | | | | | | | |
| 8-1 | 0.73 | 15 | 2569 | 2.15 | 1.5E+05 | -13.1 | -13.9 | 384 | 83 |
| 8-2 | 0.63 | 11 | 2401 | 2.12 | 2.3E+05 | -13.3 | -14 | 395 | 127 |
| 8-3 | 0.50 | 8 | 2255 | 2.09 | 3.5E+05 | -13.4 | -14.2 | 387 | 185 |
| 8-4 | 0.20 | 5 | 2097 | 2.08 | 3.2E+05 | -13.4 | -14.3 | 374 | 255 |
| 8-5 | 0.20 | 5 | 1989 | 2.08 | 3.6E+05 | -13.7 | -14.6 | 371 | 240 |
| 8-6 | 0.3 | 3 | 1868 | 2.05 | 2.8E+05 | -14 | -15.2 | 347 | 206 |
| 8-7 | 0 | 2 | 1513 | 1.85 | 2.2E+05 | -14.5 | -15.8 | 335 | 148 |
| | | | | | | | | | |
| 9-1 | 0.69 | 16 | 1867 | 2.05 | 1.80E+05 | -13.3 | -14.4 | 354 | 147 |
| 9-2 | 0.55 | 11 | 1978 | 2.05 | 2.4E+05 | -13.4 | -14.5 | 375 | 195 |
| 9-3 | 0.375 | 8 | 2053 | 2.07 | 3.10E+05 | -13.4 | -14.4 | 381 | 228 |
| 9-4 | 0.29 | 7 | 2208 | 2.08 | 3.60E+05 | -13.5 | -14.6 | 378 | 245 |
| 9-5 | 0.33 | 6 | 2305 | 2.1 | 4.10E+05 | -14.1 | -14.8 | 385 | 223 |
| 9-6 | 0.25 | 8 | 2417 | 2.1 | 4.00E+05 | -14.5 | -15.2 | 386 | 225 |

In Examples 7-1 to 9-6 in Table 5 and Table 6, the characteristics of the prototype MLCC chip were observed by adjusting the contents of the third subcomponent RE, the fourth component Ba, and the fifth subcomponent Si. In Examples 7-1 to 7-6, the content of Dy, the third subcomponent element, was changed to 1.5 mol, 2.0 mol, 2.5 mol, 4.5 mol, 5.5 mol, and 6.5 mol, and all other subcomponent contents were the same. When the content of the third subcomponent element in Example 7-1 was decreased to 1.5 mol, it may be seen that secondary phase grains were not generated in any observation area (1.85 um × 1.85 µm) (A+B=0) . In this case, the MTTF may be seen to decrease by 177 hr, which did not meet the determination standard. When the third subcomponent element was decreased by 1.5 mol, it is expected that the amount of rare earth elements required for donor-doped elements will be decreased, resulting in a decrease in reliability. Example 7-2 illustrates the characteristics when the content of the third subcomponent element is increased by 2.0 mol, from which it may be seen that compared to Example 7-1, the number (A+B) of secondary phase grains in the random observation area (1.85 um × 1.85 µm) was increased by 3, and the MTTF was increased from 177 hr to 206 hr. However, it may be seen that the high temperature IR and BDV values fall below the standard values. Example 7-3 illustrates the characteristics when the content of the third subcomponent element was increased by 2.5 mol, from which it may be seen that compared to Example 7-2, the number (A+B) of secondary phase grains in the random observation area (1.85 um × 1.85 µm) was increased by 4, and the remaining characteristics excluding the BDV was satisfactory. In Examples 7-4 and 7-5, the content of the third subcomponent element was increased to 4.5 mol and 5.5 mol, respectively, from which it may be seen that the ratio of A/(A+B) was less than 0.4, which did not significantly affect reliability, and other characteristics also meet the determination standard. Example 7-6 illustrates the characteristics in which the content of the third subcomponent element was increased by 6.5 mol, from which it may be seen that the number (A+B) of secondary phase grains in the random observation area (1.85 um × 1.85 µm) was increased by 20. The ratio of A/(A+B) was also more than or equal to 0.4, from which it may be seen that as the number (A+B) of secondary phase grains increased, A was also increased, and further, it appeared that residual secondary phase grains caused a decrease in high-temperature IR level and rapid deterioration of the MTTF.

Examples 8-1 to 8-7 illustrate the characteristics in which the content of Ba, the fourth subcomponent element, was changed to 0.25 mol, 0.5 mol, 0.75 mol, 1.25 mol, 1.5 mol, 2.5 mol, and 3.5 mol, and all other subcomponent contents were the same. Example 8-1 was an experiment conducted by adding 0.25 mol of the fourth subcomponent element, from which it may be seen that the number (A+B) of secondary phase grains in the random observation area (1.85 um × 1.85 µm) was observed to be 15, and the ratio of A/(A+B) was 0.73, thereby generating more first secondary phase grains than second secondary phase grains (A>B). It may be seen that this decreased the high-temperature IR level by 1.5E+05 Ω, and also decreased the MTTF value by 83 hr. Example 8-2 was an experiment conducted by adding 0.5 mol of the fourth subcomponent element, from which it may be seen that the number (A+B) of secondary phase grains in the random observation area (1.85 um × 1.85 um) was 11, which was reduced compared to Example 8-1. However, the ratio of A/(A+B) ratio was 0.63, which is above 0.4, indicating that more first secondary phase grains were generated than second secondary phase grains (A>B). It may be seen that the high temperature IR level was also 2.3E+05 Ω, which did not meet the characteristic determination, and the MTTF was also 127 hr, which did not meet the specific determination. In Example 8-3, MLCC was manufactured by adding the fourth subcomponent element by 0.75 mol, from it may be seen that the high-temperature IR level was increased compared to Example 8-2, which meets the specific determination. However, since the ratio of A/(A+B) was 0.5, it may be expected to have bad reliability. It can be seen that the MTTF characteristic of Example 8-3 is 185 hr, which does not meet the determination criteria. In Examples 8-4 and 8-5, the content of the fourth subcomponent element was 1.25 mol and 1.5 mol, respectively, from which it may be seen that all characteristics were met. It may be seen that the number (A+B) of secondary phase grains in the random observation area (1.85 um × 1.85 µm) of the two examples was decreased compared to Example 8-3, and fewer first secondary phase grains were generated than second secondary phase grains (A<B).

Example 8-6 was an experiment by adding 2.5 mol of the fourth subcomponent element, from which it may be seen that the number (A+B) of secondary phase grains in the random observation area (1.85 um × 1.85 um) was 3. The MTTF characteristics was decreased by 206 hr, and the high-temperature IR and BDV, as well as the TCC at the high-temperature were deteriorated. Example 8-7 was an experiment by adding 3.5 mol of the fourth subcomponent element, from which it may be seen that the number (A+B) of secondary phase grains in the random observation area (1.85 um × 1.85 µm) was decreased by 2, and only second secondary phase grains exist. However, since an excessively increased content of the fourth subcomponent element has the negative effect of increasing the appropriate sintering temperature, sufficient solid solution of rare earth elements, which are third subcomponent elements, may not be performed, and the rare earth elements of the third subcomponent element which is not solidified, may worsen the TCC. In Example 8-7, it may be seen that the TCC and MTTF at 125 °C and the high temperature IR characteristics did not match. It may be seen that when the content of the fourth subcomponent element is relatively small, the production of first secondary phase grains is promoted, which may cause rapid deterioration of reliability. Conversely, when too much fourth subcomponent element is added, because the solid solution of additives is weakened due to reduced grain growth and increased sintering temperature, and the problem of not securing density may also cause rapid reliability deterioration, it may be decisive to minimize the generation of first secondary phase grains by securing an appropriate fourth subcomponent element content and to promote the solid solution of the rare earth elements, which are the third subcomponent elements, into the shell.

Examples 9-1 to 9-6 was experiments conducted that the content of Si, the fifth subcomponent element, was changed to 0.5 mol, 0.8 mol, 1.1 mol, 1.7 mol, 2.0 mol, and 3.0 mol. The contents of the remaining subcomponent elements are the same. Example 9-1 was an experiment conducted by adding 0.5 mol of the fifth subcomponent element, from it may be seen that the number (A+B) of secondary phase grains in the random observation area (1.85 um × 1.85 µm) is 16, and more first secondary phase grains were generated (A>B) than second secondary phase grains. This decreased the high temperature IR level by 1.8E+05 Ω and decreased the MTTF decreased by 147 hr, which did not meet the characteristic determination. Example 9-2 was an embodiment conducted by adding 0.8 mol of the fifth subcomponent element, from it may be seen that the number (A+B) of secondary phase grains in the random observation area (1.85 um × 1.85 um) was 11 but the ratio of A/(A+B) was 0.55, so that a high temperature IR level reduction and rapid reliability deterioration may be expected due to the high ratio of first secondary phase grains. It may be seen that the high temperature IR level of Example 9-2 was 2.4E+05 Ω, and the MTTF was 195 hr, which falls short of the specific determination. Example 9-3 was an experiment conducted by adding the content of the fifth subcomponent element at 1.1 mol, from which it may be seen that the number (A + B) of secondary phase grains in the random observation area (1.85 um × 1.85 µm) was decreased by 8, and the first secondary phase grains were generated in smaller quantities than the second secondary phase grains. (A<B), which did not have a significant effect on the IR level or the MTTF value. It may be seen that even if the content of the fifth subcomponent element was gradually increased from Examples 9-4 to 9-6, there was no significant difference in the number (A + B) of secondary phase grains in the random observation area (1.85 um × 1.85 µm) and fewer first secondary phase grains were generated (A<B) than second secondary phase grains, which had a good MTTF level. Through this example embodiment, when the content of Si, the fifth subcomponent element, is relatively low, because the content of the fifth subcomponent element required for the generation of the second secondary grains is insufficient, the generation of the first secondary grains may be promoted, and reliability deterioration may be expected to occur more quickly.

Accordingly, in order to implement the target characteristics of the present disclosure, it may be seen that under the condition that the content of the third subcomponent element is maintained at 3.5 to 5.5 mol, the content of the fourth subcomponent element is maintained at 1.25 to 1.5 mol, and the content of the fifth subcomponent element is maintained at 1.1 to 3.0 mol, the characteristics of the prototype MLCC chip may be satisfied.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component (100), comprising:
a body (110) including a capacitance formation portion (Ac) including a dielectric layer (111) and internal electrodes (121, 122); and
external electrodes (131, 132) disposed on the body (110),
wherein when secondary phase grains including rare earth element and titanium (Ti) are referred to as first secondary phase grains (10) and secondary phase grains including the rare earth element and silicon (Si) are referred to as second secondary phase grains (20), and when the number of the first secondary phase grains (10) included in the capacitance formation portion (Ac) is referred to as A and the number of the second secondary phase grains (20) included in the capacitance formation portion (Ac) is referred to as B,
the capacitance formation portion (Ac) satisfies 0 < A/(A+B) ≤ 0.4.

2. The multilayer electronic component (100) according to claim 1, wherein the capacitance formation portion (Ac) includes a cross-sectional area of 1.85 um × 1.85 um satisfying a condition of 0 < A/(A+B) ≤ 0.4.

3. The multilayer electronic component (100) according to claim 2, wherein in the cross-sectional area of 1.85 um × 1.85 um satisfying the condition 0 < A/(A+B) ≤ 0.4, A and B satisfy 5 ≤ A+B < 20.

4. The multilayer electronic component (100) according to claim 1, wherein the rare earth element is at least one of lanthanum (La), samarium (Sm), dysprosium (Dy), terbium (Tb), holmium (Ho), erbium (Er), and gadolinium (Gd) and,
the rare earth element does not include at least one of ytterbium (Yb) and yttrium (Y).

5. The multilayer electronic component (100) according to claim 1, wherein a ratio of an average atomic percentage of the rare earth element to an average atomic percentage of titanium (Ti) included in the first secondary phase grains (10) is 0.4 or more and 1.5 or less.

6. The multilayer electronic component (100) according to claim 1, wherein an average atomic percentage of the rare earth element included in the first secondary phase grains (10) is 10 at% or more and 25 at% or less, and
an average atomic percentage of titanium (Ti) included in the first secondary phase grains (10) is more than 15 at% and 20 at% or less.

7. The multilayer electronic component (100) according to claim 1, wherein a ratio of an average atomic percentage of the rare earth element to an average atomic percentage of silicon (Si) included in the second secondary phase grains (20) is 0.5 or more and 2.0 or less.

8. The multilayer electronic component (100) according to claim 1, wherein an average atomic percentage of the rare earth element included in the second secondary phase grains (20) is 20 at% or more and 25 at% or less, and
an average atomic percentage of silicon (Si) included in the second secondary phase grains (20) is 10 at% or more and 15 at% or less.

9. The multilayer electronic component according (100) to claim 1, wherein the dielectric layer (111) includes a barium titanate (BaTiO₃)-based main component.

10. The multilayer electronic component (100) according to claim 9, wherein the dielectric layer (111) further includes a first subcomponent element,
wherein the first subcomponent element is a variable-valency acceptor element, the variable-valency acceptor element is at least one of manganese (Mn), vanadium (V), chromium (Cr), iron (Fe), cobalt (Co), nickel (Ni), copper (Cu), and zinc (Zn) and,
the number of mols of the first subcomponent element compared to 100 mol of titanium (Ti) included in the dielectric layer (111) is 0.3 mol or more and 0.5 mol or less.

11. The multilayer electronic component (100) according to claim 9, wherein the dielectric layer (111) further includes a second subcomponent element,
wherein the second subcomponent element is magnesium (Mg), and the number of mols of the second subcomponent element compared to 100 mol of titanium (Ti) included in the dielectric layer (111) is 0.3 mol or more and 0.5 mol or less.

12. The multilayer electronic component (100) according to claim 9, wherein the dielectric layer (111) further includes a third subcomponent element,
wherein the third subcomponent element is the rare earth element, and the number of mols of the third subcomponent element compared to 100 mol of titanium (Ti) included in the dielectric layer (111) is 3.5 mol or more and 5.5 mol or less.

13. The multilayer electronic component (100) according to claim 9, wherein the dielectric layer (111) further includes a fourth subcomponent element,
wherein the fourth subcomponent element is at least one of barium (Ba) and calcium (Ca), and the number of mols of the fourth subcomponent element compared to 100 mol of titanium (Ti) included in the dielectric layer (111) is 1 mol or more and 1.5 mol or less.

14. The multilayer electronic component (100) according to claim 9, wherein the dielectric layer (111) further includes a fifth subcomponent element,
wherein the fifth subcomponent element is silicon (Si), and the number of mols of the fifth subcomponent element compared to 100 mol of titanium (Ti) included in the dielectric layer (111) is 1.1 mol or more and 3 mol or less.

15. The multilayer electronic component (100) according to claim 1, wherein a size of the first secondary phase grains (10) is in a range from 50 nm to 1 µm, and
a size of the second secondary phase grains (20) is in a range from 100 nm to 1 µm.
